# EUROPEAN PATENT APPLICATION

(11) **EP 1 662 403 A1**
(43) Date of publication of application: **31.05.2006**
(21) Application number: 04747390.5
(22) Date of filing: 12.07.2004
(51) Int. Cl.: G06F 17/24

(54) **INFORMATION PROCESSING METHOD, INFORMATION PROCESSING PROGRAM, INFORMATION PROCESSING DEVICE, AND REMOTE CONTROLLER**

(30) Priority: 11.07.2003 JP 2003196076
(71) Applicant: National Institute of Advanced Industrial Science and Technology, Tokyo 100-8921 (JP)
(72) Inventor: IZUMI, Noriaki, Nat.Inst.Adv.Ind.Sci & Techn., Tokyo 100-8921 (JP); TAKAGI, Akira, Nat.Inst.Adv.Ind.Sci & Techn., Tokyo 100-8921 (JP)
(74) Representative: Pfenning, Meinig & Partner GbR
(86) International application number: PCT/JP2004/009923
(87) International publication number: WO 2005/006211

(57) **Abstract**

A user interface unit (30) that specifies a copy area including plural objects from copy source information displayed on a display unit (20) at copy timing, and that specifies a past area from past target information at past timing, a semantic analysis performing unit (42) that performs a semantic analysis of each of the plural objects, a paste target selecting unit (72) that selects paste targets which match with results of the semantic analysis, and a pasting unit (73) that pastes the plural objects to the paste targets.

## Description

### Technical Field

The present invention relates to a method of information processing, a program of information processing, an information processing apparatus, and a remote controller, which are suitable for performing a copy-and-paste operation. More particularly, the present invention relates to a method of information processing, a program of information processing, an information processing apparatus, and a remote controller, according to which the copy-and-paste operation can be performed on plural objects by a simplified operation.

### Background Art

Conventional information processing apparatuses (Patent Document 1) generally have a function of copy-and-paste, according to which a specific character string (object) on a screen is copied (here, copying includes cutting), and pasted (affixed) on another position on the screen.

In the copy operation, a user specifies a copy range by pushing down a range specification key on a keyboard or a mouse button. For example, when the user performs the copy operation with the keyboard, the user moves a cursor to a first character of the object, pushes down the range specification key of the keyboard, moves the cursor from the first character to a last character of the object, and pushes down the range specification key again, to specify the copy range.

On the other hand, when the user performs the copy operation with the mouse, the user moves a mouse cursor to a first character of the object, pushes down the mouse button, and moves the mouse cursor up to a last character of the object while keeping the mouse button push down, to specify the copy range.

For example, when the user wants to enter an address (copy source) into an entry field (paste target), the user can skip an operation of typing in the address by performing the copy-and-paste operation, i.e., by copying a character string of the address and pasting the copied character string of the address into the entry field.

As can be seen from the above, in the conventional manner of the copy-and-paste operation, the range of the object to be copied and pasted (e.g., a range from a first character to a last character) is specified physically and precisely for the copy-and-paste operation.
Patent Document 1: Japanese Patent Application Laid-Open No. H11-306177 Publication

### Disclosure of Invention

### Problem to be Solved by the Invention

When the conventional information processing apparatus is employed for the copy-and-paste operation on plural objects, however, the user is required to perform the copy-and-paste operation on each object. Hence, the copy-and-paste operation is extremely cumbersome.

For example, when the user is required to fill in six entry fields with six objects, i.e., a postal code, an address, a telephone number, a name, a birthday, and an alma mater, the user needs to perform the copy-and-paste operation six times. In addition, the user must check which entry field, i.e., a paste target corresponds to which copied object, and pay attention to paste the copied object into the proper corresponding entry field.

In addition, since the conventional technique requires the physical and precise specification of the object range, a collection of objects that have association in meaning with each other cannot be selected as a specified range at one time by one operation. Thus, provision of a user-friendly man-machine interface is difficult to realize.

In view of the foregoing, an object of the present invention is to provide a method of information processing, a program of information processing, an information processing apparatus, and a remote controller, according to which the copy-and-paste operation can be performed on plural objects by a simplified operation.

### Means for Solving Problem

In order to solve the problems as described above and to achieve an object, a method of information processing according to the present invention includes, copying plural objects; performing a semantic analysis on each of the plural objects; selecting paste targets which match with results of the semantic analysis; and pasting the plural objects to the paste targets.

Further, a program of information processing according to the present invention makes a computer execute the method of information processing as described above.

Still further, an information processing apparatus according to the present invention includes a copying unit that copies plural objects; a semantic analysis performing unit that performs a semantic analysis of each of the plural objects; a paste target selecting unit that selects paste targets which match with results of the semantic analysis; and a pasting unit that pastes the plural objects to the paste targets.

Still further, a remote controller according to the present invention executes the method of information processing as described above.

### Effect of the Invention

According to the present invention, since each of the plural copied objects is subjected to the semantic analysis, a paste target which matches with the result of the semantic analysis is selected, and each of the plural objects is pasted to the selected paste target, the copy-and-paste operation can be performed on the plural objects by a simplified operation.

### Brief Description of Drawings

FIG. 1 is a block diagram of a structure of a first embodiment of the present invention;
FIG. 2 shows copy source information displayed on a display unit shown in FIG. 1 and a copy source module shown in FIG. 22;
FIG. 3 shows paste target information displayed on the display unit shown in FIG. 1 and a paste target module shown in FIG. 22;
FIG. 4 shows the paste target information shown in FIG. 3 after a paste operation;
FIG. 5 shows copy source source information x corresponding to the copy source information shown in FIG. 2;
FIG. 6 shows copy source source information corresponding to the copy source information shown in FIG. 2;
FIG. 7 shows paste target source information corresponding to the paste target information shown in FIG. 3;
FIG. 8 shows a dictionary database shown in FIG. 1;
FIG. 9 is a flowchart of operations according to first to third embodiments of the present invention;
FIG. 10 is a flowchart of a copying process shown in FIG. 9 according to the first embodiment;
FIG. 11 is a flowchart of a paste preparation process shown in FIG. 9 according to the first embodiment;
FIG. 12 is a flowchart of a pasting process shown in FIG. 9 according to the first and the second embodiments;
FIG. 13 shows a result of a structural analysis of a copy source source according to the first and the second embodiments;
FIG. 14 illustrates an operation according to the first embodiment;
FIG. 15 illustrates the operation according to the first embodiment;
FIG. 16 shows a result of a semantic analysis of the copy source according to the first embodiment;
FIG. 17 shows a result of a structural analysis of a paste target source according to the first and the second embodiments;
FIG. 18 illustrates the operation according to the first embodiment;
FIG. 19 illustrates the operation according to the first embodiment;
FIG. 20 shows a result of a semantic analysis of a paste target according to the first embodiment;
FIG. 21 illustrates selection of the paste target according to the first embodiment;
FIG. 22 is a block diagram of a structure according to the second embodiment of the present invention;
FIG. 23 shows a dictionary database shown in FIG. 22;
FIG. 24 is a flowchart of the copying process shown in FIG. 9 according to the second embodiment;
FIG. 25 is a flowchart of the paste preparation process shown in FIG. 9 according to the second embodiment;
FIG. 26 shows a result of a semantic analysis of the copy source according to the second embodiment;
FIG. 27 shows a correspondence between the result of the semantic analysis of the copy source shown in FIG. 26 and a result of an audio command analysis;
FIG. 28 illustrates an operation according to the second embodiment;
FIG. 29 shows a result of a semantic analysis of the paste target according to the second embodiment;
FIG. 30 is a block diagram of a structure according to the third embodiment of the present invention;
FIG. 31 shows copy source information displayed on a display unit shown in FIG. 30;
FIG. 32 shows paste target information displayed on the display unit shown in FIG. 30;
FIG. 33 shows a thesaurus dictionary database shown in FIG. 30;
FIG. 34 is a flowchart of the copying process shown in FIG. 9 according to the third embodiment;
FIG. 35 is a flowchart of the paste preparation process shown in FIG. 9 according to the third embodiment;
FIG. 36 is a flowchart of the pasting process shown in FIG. 9 according to the third embodiment; and
FIG. 37 is a block diagram of a structure of a modification of the first to the third embodiments.

### Explanation of Letters or Numerals

- 20: Display Unit
- 30: User Interface Unit
- 31: User Operation Managing Unit
- 32: Copy Area Specifying Unit
- 33: Paste Area Specifying Unit
- 34: Supplementary Specifying Unit
- 40: Source Information Analyzing Unit
- 41: Source Structure Analyzing Unit
- 42: Semantic Analysis Performing Unit
- 43: Shaping Unit
- 70: Paste Processing Unit
- 71: Entry Candidate Selecting Unit
- 72: Paste Target Selecting Unit
- 73: Pasting Unit
- 300: User Interface Unit
- 301: User Operation Managing Unit
- 302: Microphone
- 303: Audio Command Analyzing Unit
- 400: Source Information Analyzing Unit
- 401: Source Structure Analyzing Unit
- 402: Semantic Analysis Performing Unit
- 700: Paste Processing Unit
- 702: Paste Target Selecting Unit
- 703: Pasting Unit
- 800: Copy Source Module
- 900: Paste Target Module
- 1000: Source Information Analyzing Unit
- 1001: Source Structure Analyzing Unit
- 1002: Semantic Analysis Performing Unit
- 1003: Shaping Unit
- 1100: Thesaurus Dictionary Database
- 1200: Paste Processing Unit
- 1201: Entry Candidate Selecting Unit
- 1202: Paste Target Selecting Unit
- 1203: Pasting Unit
- 1204: Semantic Distance Calculating Unit

### Best Mode for Carrying Out the Invention

A method of information processing, a program of information processing, an information processing apparatus, and a remote controller, according to the first to the third embodiments of the present invention will be described in detail below with reference to the accompanying drawings.

### First Embodiment

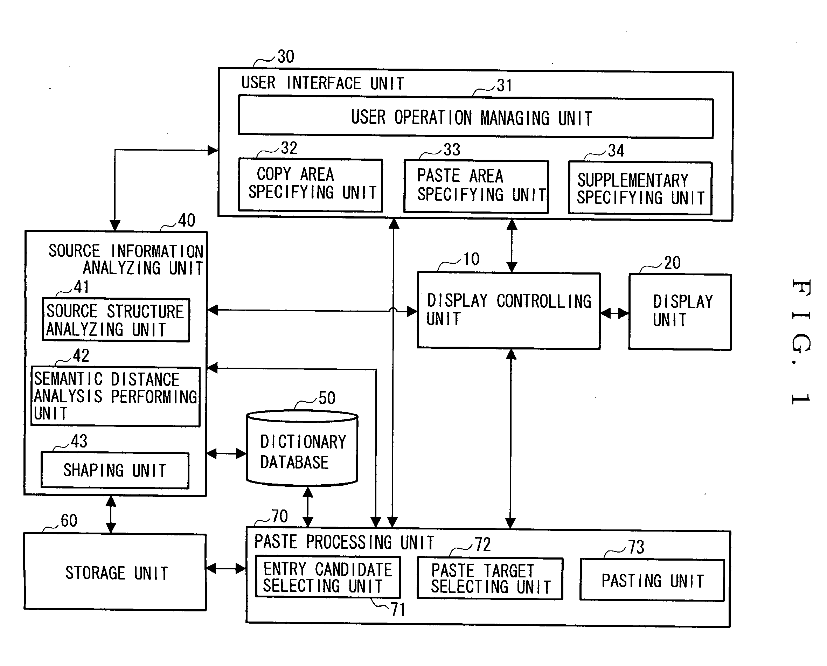

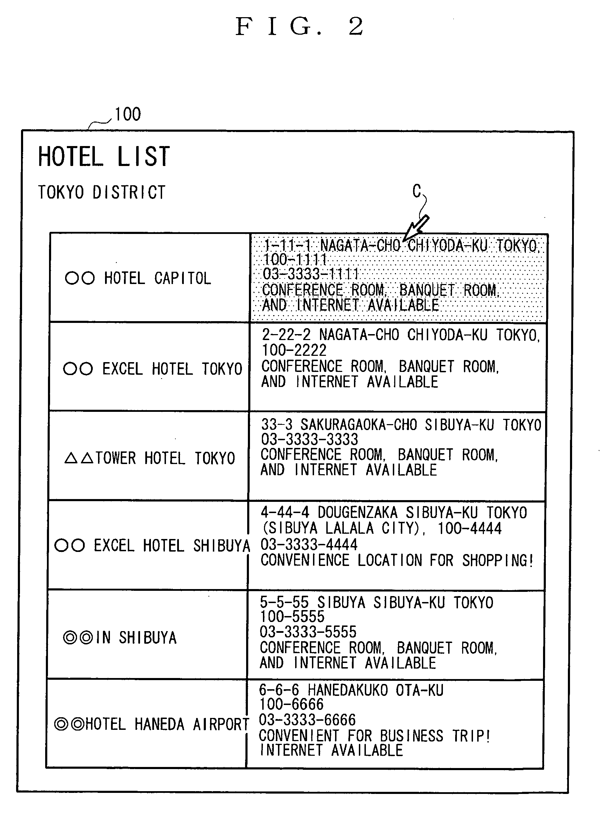

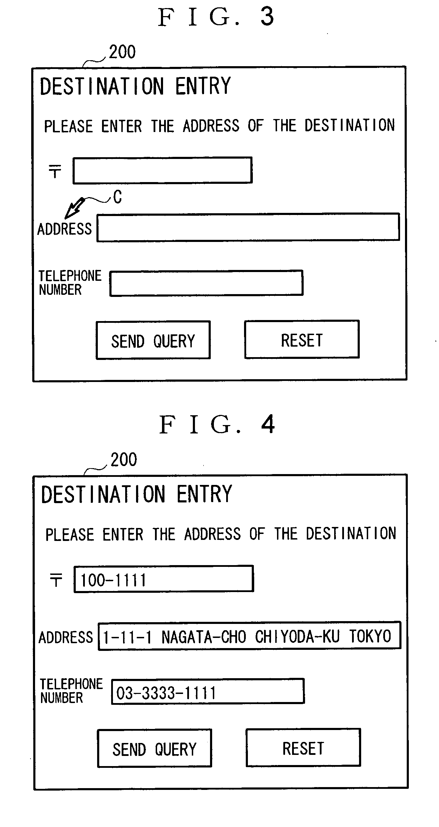

FIG. 1 is a block diagram of the structure of the first embodiment of the present invention. In FIG. 1, a display controlling unit 10 performs a display control of a display unit 20. The display unit 20 is, for example, a Liquid Crystal Display (LCD), or a Cathode Ray Tube (CRT). The display unit 20 displays copy source information 100 (see FIG. 2) and paste target information 200 (see FIG. 3), for example, under the control of the display controlling unit 10.

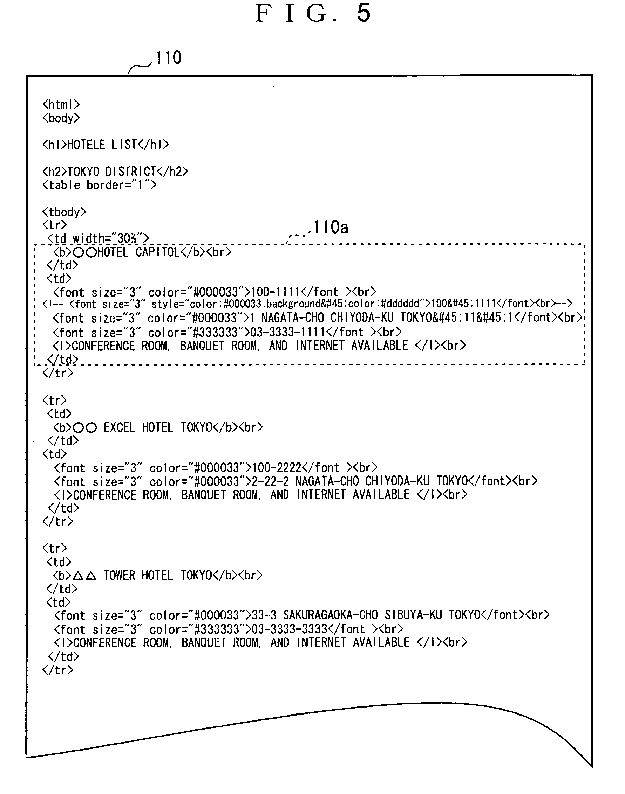

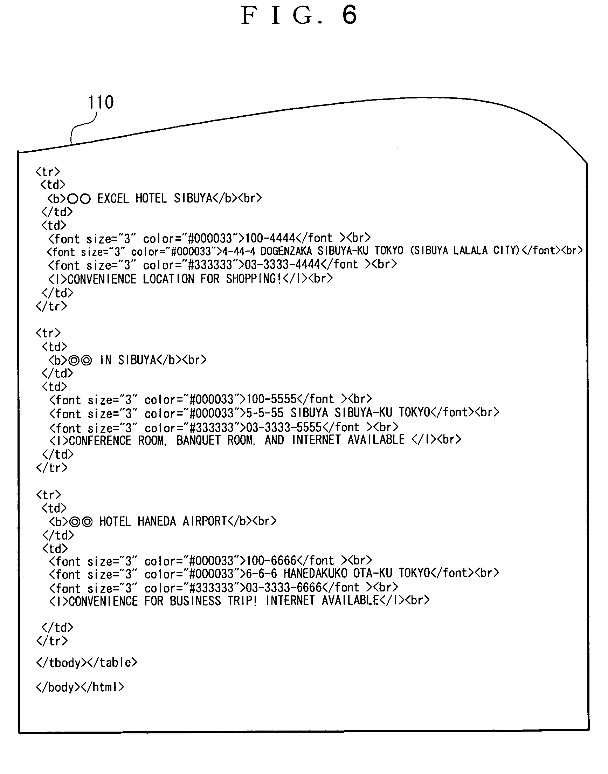

The copy source information 100 shown in FIG. 2 corresponds with copy source source information 110 (see FIGS. 5 and 6) described in HyperText Markup Language (HTML), for example. In practice, the copy source source information 110 is read into a browser (not shown) and displayed as the copy source information 100 on the display unit 20.

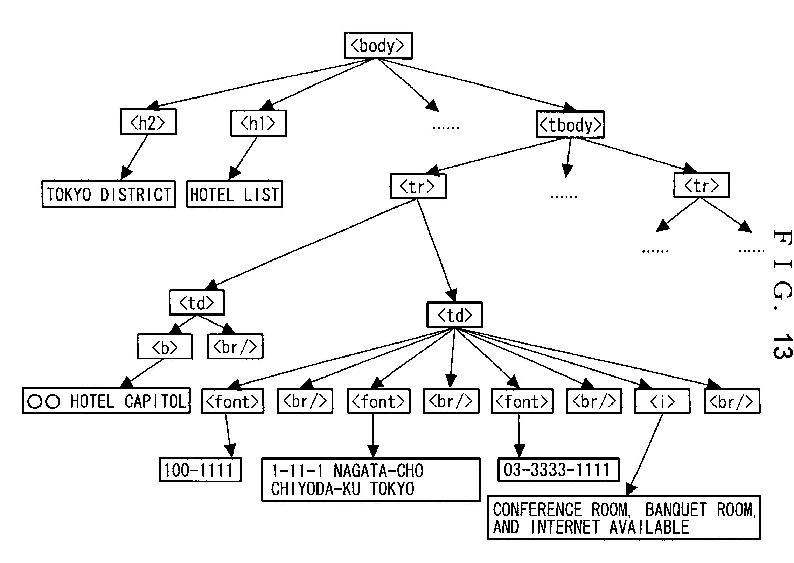

Here, the HTML is used for a description of a logical structure of a document (character string or the like), and represents a linkage to other document by a reserved word called "tag" indicated as enclosed by symbols "<" and ">". FIG. 13 shows a logical structure of the copy source source information 110 (copy source information 100).

The copy source information 100 shown in FIG. 2 is information on the copy source in the copy-and-paste operation. Hereinafter, the term "copy" should be understood as including "cut." The copy source information 100 is a list of hotels in Tokyo district and includes names of hotels ("OO Hotel Capitol" or the like), postal codes ("100-1111" or the like), addresses ("1-11-1 Nagata-cho Chiyoda-ku Tokyo" or the like), telephone numbers ("03-3333-1111" or the like), and notes ("Conference Room, Banquet Room, and Internet Available", or the like).

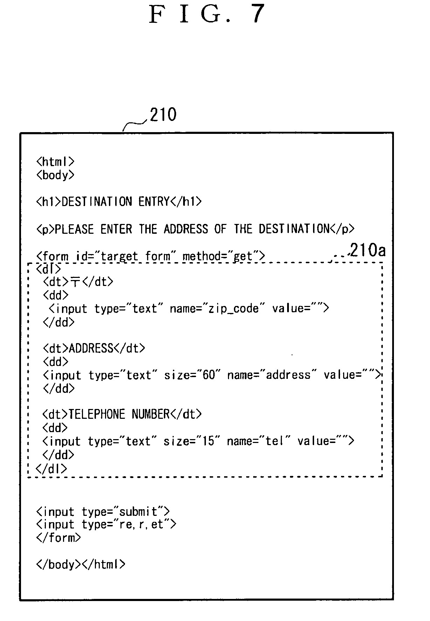

On the other hand, the paste target information 200 shown in FIG. 3 also corresponds to paste target source information 210 (see FIG. 7) described in the HTML, for example. The paste target source information 210 is read into the browser (not shown) and displayed on the display unit 20. FIG. 4 shows a post-paste form of the paste target information 200 shown in FIG. 3.

Returning to FIG. 1, a user interface unit 30 has a function as a man-machine interface (mouse, keyboard, track ball, or the like) manipulated by the user. The user interface unit 30 includes a user operation managing unit 31, a copy area specifying unit 32, a paste area specifying unit 33, and a supplementary specifying unit 34.

The user operation managing unit 31 has a function of managing the operation by the user. The copy area specifying unit 32 has a function of specifying a copy area including an object (character string or the like) to be copied in the copy source information 100 (see FIG. 2) displayed on the display unit 20 (see FIG. 2) based on an operation by the user. For example, the copy area specifying unit 32 cooperates with a cursor C shown in FIG. 2, and specifies a neighboring area of the cursor C as the copy area.

The paste area specifying unit 33 has a function of specifying a paste area to which the object is pasted from the paste target information 200 (see FIG. 3) displayed on the display unit 20 based on the operation by the user. Similarly to the copy area specifying unit 32, the paste area specifying unit 33 cooperates with the cursor C shown in FIG. 3 and specifies a neighboring area of the cursor C as the paste area.

Returning to FIG. 1, the supplementary specifying unit 34 has a function of specifying an object outside the copy area and the paste area described above. For example, the supplementary specifying unit 34 specifies a copy source file in a storage unit 60 described later.

A source information analyzing unit 40 has a function of analyzing a source structure (tree structure or the like) and a semantic structure of the copy source source information 110 (see FIGS. 5 and 6), the paste target source information 210 (see FIG. 7), partial copy source source information 110a (see FIG. 5), and partial paste target source information 210a (see FIG. 7) described later. The source information analyzing unit 40 includes a source structure analyzing unit 41, a semantic analysis performing unit 42, and a shaping unit 43.

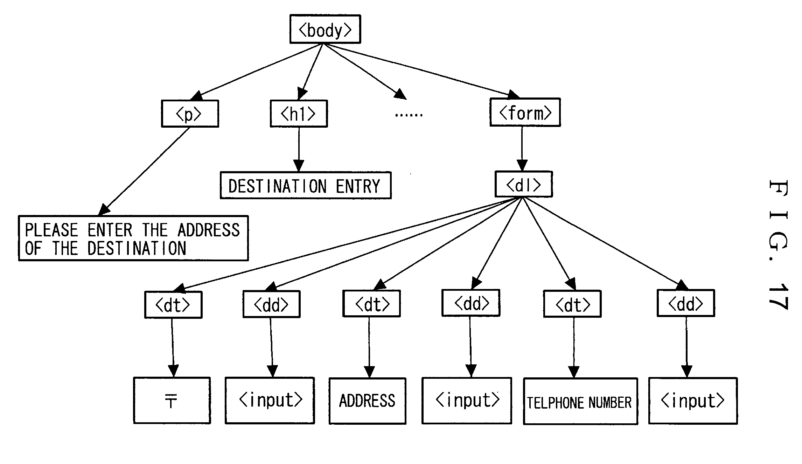

In the source information analyzing unit 40, the source structure analyzing unit 41 has a function of analyzing the source structures (tree structures or the like) of the copy source source information 110 (see FIGS. 5 and 6) and the paste target source information 210 (see FIG. 7). FIG. 13 shows a result of the structural analysis of a copy source source corresponding to the copy source source information 110. FIG. 17 shows a result of the structural analysis of a paste target source corresponding to the paste target source information 210 (see FIG. 7).

The semantic analysis performing unit 42 has a function of analyzing the semantic structures of the partial copy source source information 110a (see FIG. 5) and the partial paste target source information 210a (see FIG. 7) while referring to a dictionary database 50.

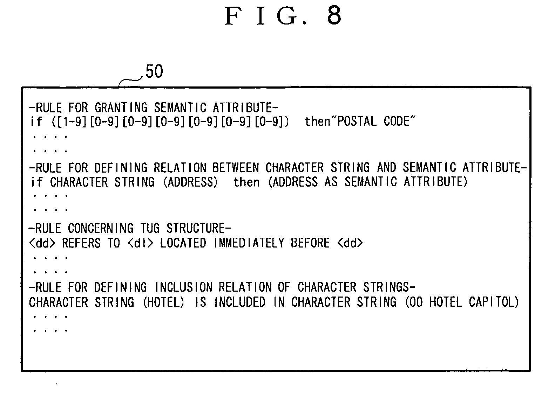

The dictionary database 50 is a database which stores respective rules each described in a format of if/then or the like as shown in FIG. 8. In FIG. 8, a rule for granting a semantic attribute, a rule for defining a relation between a character string and a semantic attribute, a rule concerning a tag structure, a rule for defining an inclusion relation of character strings, or the like are shown.

For example, the rule for granting the semantic attribute defines that when the object of the semantic structure analysis falls under the categories described after "if" in the rule, i.e., [1-9] (which means that the pertinent object is one of the numbers 1 to 9), [0-9], ..., [0-9], the analyzed object is determined to have the semantic structure of "postal code" as described after "then" in the rule.

Returning to FIG. 1, the shaping unit 43 shapes the original copy source source information, the partial copy source source information, the result of the structural analysis of the copy source source, and the result of the semantic analysis of the copy source collectively into a copy source file, and stores the copy source file in the storage unit 60.

A paste processing unit 70 executes processing related with pasting based on the result of the semantic analysis of the copy source included in a copy source file specified by the supplementary specifying unit 34.

An entry candidate selecting unit 71 has a function of reading out the copy source file specified by the supplementary specifying unit 34 from the storage unit 60 as an entry candidate. A paste target selecting unit 72 selects a paste target of a copy source object based on a result of matching between the result of the semantic analysis of the copy source included in the copy source file read out by the entry candidate selecting unit 71 and the result of the semantic analysis of the paste target. The operation of the paste target selecting unit 72 will be described later in detail. A pasting unit 73 pastes the copy source object to the paste target (see FIG. 3) selected by the paste target selecting unit 72 as shown in FIG. 4.

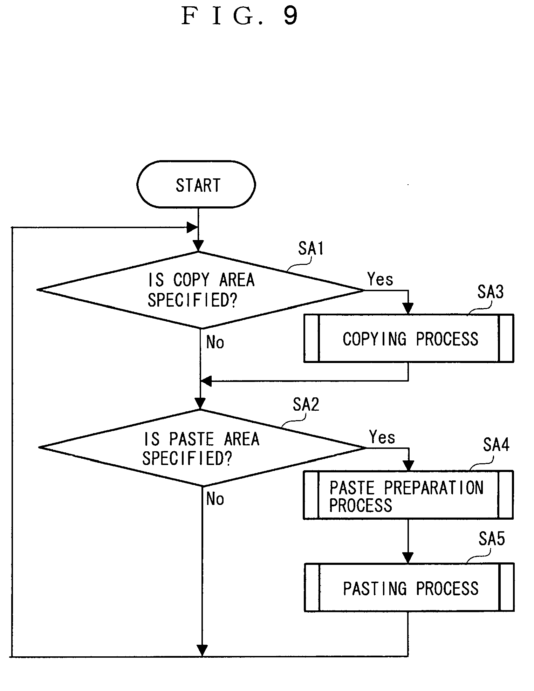

The operation according to the first embodiment will be described with reference to the flowcharts of FIGS. 9 to 12 and FIGS. 13 to 21. As a presupposition, it is assumed that the display unit 20 displays the copy source information 100 (see FIG. 2) and the paste target information 200 (see FIG. 3).

In step SA1 shown in FIG. 9, the source structure analyzing unit 41 determines whether the user specifies the copy area in the copy source information 100 (see FIG. 2) using the copy area specifying unit 32 or not. Here, it is assumed that the result of determination is "No."

In step SA2, the source structure analyzing unit 41 determines whether the user specifies the paste area in the paste target information 200 (see FIG. 3) using the paste area specifying unit 33 or not. Here, it is assumed that the result of determination is "No." Then, the determinations in steps SA1 and SA2 are repeatedly performed until the result of determination is "Yes."

When the user specifies the copy area corresponding to the cursor C in the copy source information 100 shown in FIG. 2 using the copy area specifying unit 32, the source structure analyzing unit 41 gives the result of determination "Yes" in step SA1. In step SA3, the copying process is executed. Here, it is assumed that the cursor C is located at the address "1-11-1 Nagata-cho Chiyoda-ku Tokyo" in the copy source information 100.

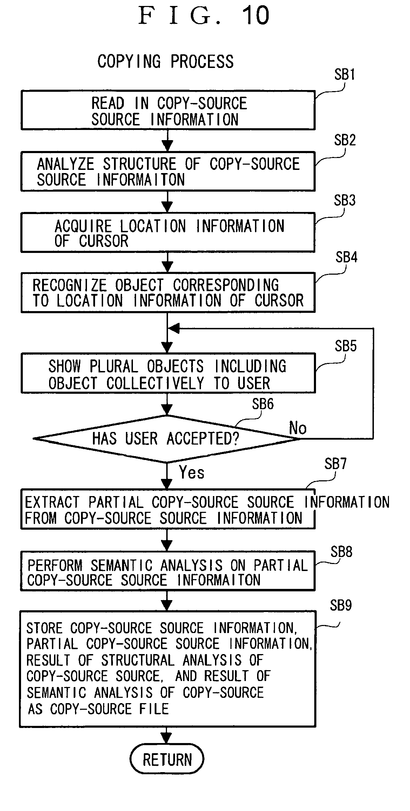

Specifically, in step SB1 shown in FIG. 10, the source structure analyzing unit 41 reads in the copy source source information 110 (see FIGS. 5 and 6) corresponding to the copy source information 100 via the user interface unit 30.

In step SB2, the source structure analyzing unit 41 analyzes the copy source source information 110 and obtains the result of the structural analysis of the copy source source given as a tree structure as shown in FIG. 13.

Shown in FIG. 13 are character strings "Tokyo district," "Hotel List," "OO Hotel Capitol," "100-1111," "1-11-1 Nagata-cho Chiyoda-ku Tokyo," "03-3333-1111," and "Conference Room, Banquet Room, and Internet Available" among character strings of the copy source information 100 shown in FIG. 2. Other character strings are not shown for convenience.

In step SB3, the source structure analyzing unit 41 acquires location information of the cursor C in the copy source information 100 shown in FIG. 2 from the user operation managing unit 31. In step SB4, the source structure analyzing unit 41 recognizes an object corresponding to the location information by referring to the result of the structural analysis of the copy source source shown in FIG. 13.

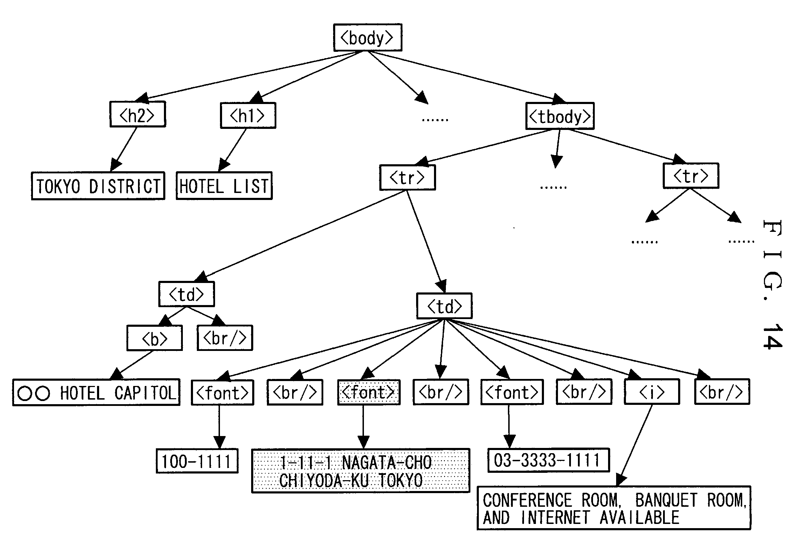

Here, the source structure analyzing unit 41 recognizes <font> and "1-11-1 Nagata-cho Chiyoda-ku Tokyo" shown with half-tone dot meshing in FIG. 14 as the objects corresponding to the location information of the cursor C (see FIG. 2).

In step SB5, the source structure analyzing unit 41 shows plural objects including the objects recognized in step SB4 (<font> and "1-11-1 Nagata-cho Chiyoda-ku Tokyo": see FIG. 14) collectively to the user.

Specifically, the plural objects are <td>, <font>, "100-1111," <br/>, <font>, "1-11-1 Nagata-cho Chiyoda-ku Tokyo," <br/>, <font>, "03-3333-1111," <br/>, <i>, "Conference Room, Banquet Room, and Internet Available," and <br/>.

Here, the plural objects are subordinate objects of <td> which is an upper object of <font> and "1-11-1 Nagata-cho Chiyoda-ku Tokyo" (see FIG. 14).

The selection of the plural objects may be achieved with the use of a plural object selection pattern according to which plural objects structurally located at upper positions of the pertinent object or in the vicinity (at lower position, for example) of the pertinent object are selected, or alternatively with the use of another plural object selection pattern according to which plural objects located spatially in the vicinity of the pertinent object are selected.

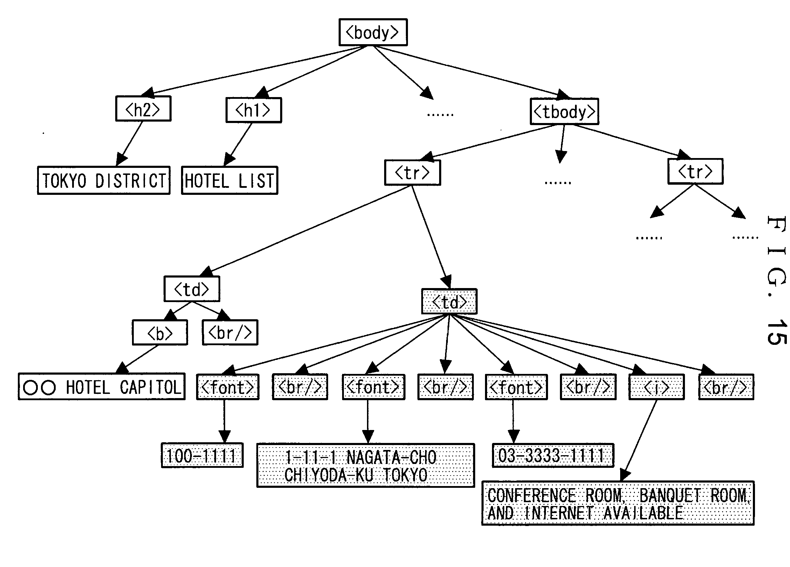

Here, the selection according to the structural type of the plural object selection pattern is performed on the plural objects whose structures are clarified in the HTML, for example, and an object which is located on a particular node and other objects which have structurally close association with the pertinent object (the objects located at lower nodes that are directly linked to the upper node, for example) are selected as shown in FIG. 15.

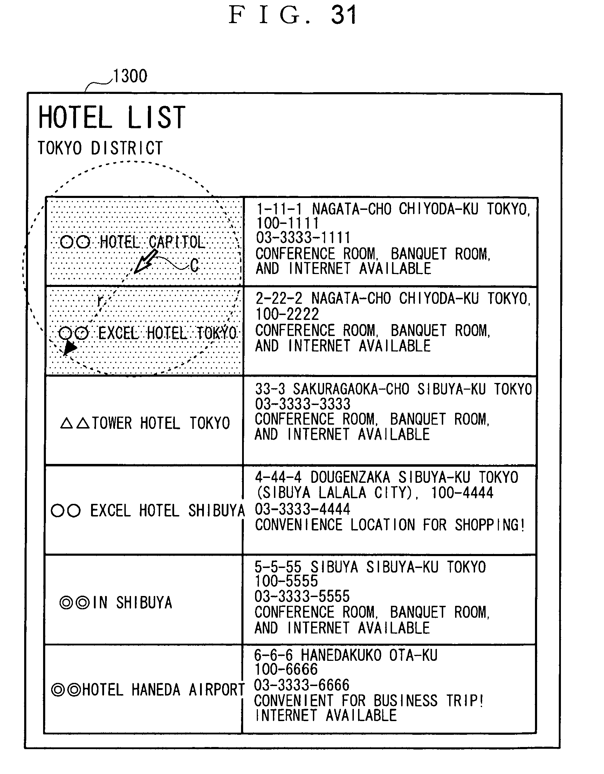

On the other hand, according to the spatial type of the plural object selection pattern, plural objects are selected based on the physical distance between the objects (for example, "OO Hotel Capitol" and "OO Excel Hotel Tokyo" located inside a circle of a radius r shown in FIG. 31 described later are selected).

When the plural objects mentioned above are shown to the user, "100-1111," "1-11-1 Nagata-cho Chiyoda-ku Tokyo," and "Conference Room, Banquet Room, and Internet Available" are highlighted in the copy source information 100 as indicated by the half-tone dot meshing shown in FIG. 2.

Then, the user determines whether the highlighted portions are desired copy areas or not. The determination is made based on a predetermined standard. When the object (character string or the like) to be pasted to the paste target information 200 (see FIG. 3) is included in the highlighted portions described above, the user gives a result of determination "Yes" and accepts the copy areas using the supplementary specifying unit 34.

In step SB6, the source structure analyzing unit 41 determines whether the user accepts or not as mentioned above. Here, it is assumed that the result of determination is "Yes." When the result of determination in step SB6 is "No," the source structure analyzing unit 41, returning to step SB5, re-exhibits plural objects (including the objects <font> and "1-11-1 Nagata-cho Chiyoda-ku Tokyo"; see FIG. 14) collectively to the user according to another plural object selection pattern.

In step SB7, the semantic analysis performing unit 42 extracts the partial copy source source information 110a (a portion enclosed by a broken line) corresponding to the plural objects accepted in step SB6 from the copy source source information 110 shown in FIG. 5.

In step SB8, the semantic analysis performing unit 42 performs the semantic analysis of the objects shown below included in the partial copy source source information 110a while referring to the dictionary database 50.
· "100-1111"
· "1-11-1 Nagata-cho Chiyoda-ku Tokyo"
· "03-3333-1111"
· "Conference Room, Banquet Room, and Internet Available"

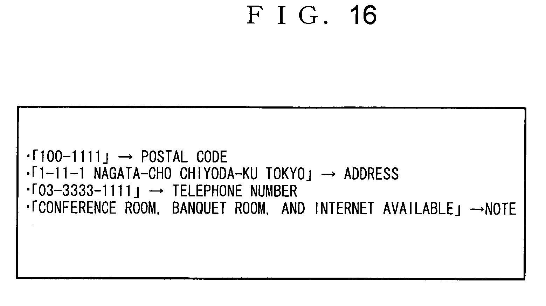

FIG. 16 shows the result of the semantic analysis of the copy source in step SB8. In FIG. 16, "100-1111" is analyzed to have a semantic attribute "postal code." Further, "1-11-1 Nagata-cho Chiyoda-ku Tokyo" is analyzed to have a semantic attribute "address." Further, "03-3333-1111" is analyzed to have a semantic attribute "telephone number." Further, "Conference Room, Banquet Room, and Internet Available" is analyzed to have a semantic attribute "note."

In step SB9, the shaping unit 43 shapes the original copy source source information 110, the partial copy source source information 110a, the result of the structural analysis of the copy source source (see FIG. 13), and the result of the semantic analysis of the copy source (see FIG. 16) collectively into a copy source file, and stores the copy source file into the storage unit 60.

When the user specifies the paste area corresponding to the cursor C in the paste target information 200 shown in FIG. 3 using the paste area specifying unit 33, the source structure analyzing unit 41 gives a result of determination in step SA2 as "Yes." In step SA4, the paste preparation process is executed. Here, it is assumed that the cursor C is located at the "address" in the paste target information 200.

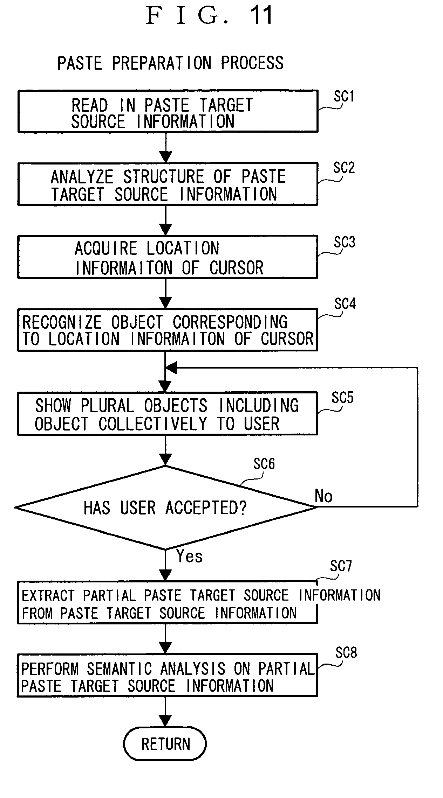

Specifically, in step SC1 shown in FIG. 11, the source structure analyzing unit 41 reads in the paste target source information 210 (see FIG. 7) corresponding to the paste target information 200 from the display controlling unit 10 via the user interface unit 30.

In step SC2, the source structure analyzing unit 41 analyzes the paste target source information 210 and obtains a result of the structural analysis of the paste target source given as a tree structure as shown in FIG. 17.

Shown in FIG. 17 are character strings (including a single character), "destination entry," "please enter the address of the destination," "T̅ (symbol representing the postal code)," "address," and "telephone number" included in the paste target information 200 shown in FIG. 3.

In step SC3, the source structure analyzing unit 41 acquires the location information of the cursor C in the paste target information 200 shown in FIG. 3 from the user operation managing unit 31. In step SC4, the source structure analyzing unit 41 recognizes the objects corresponding to the location information in the result of the structural analysis of the paste target source shown in FIG. 17.

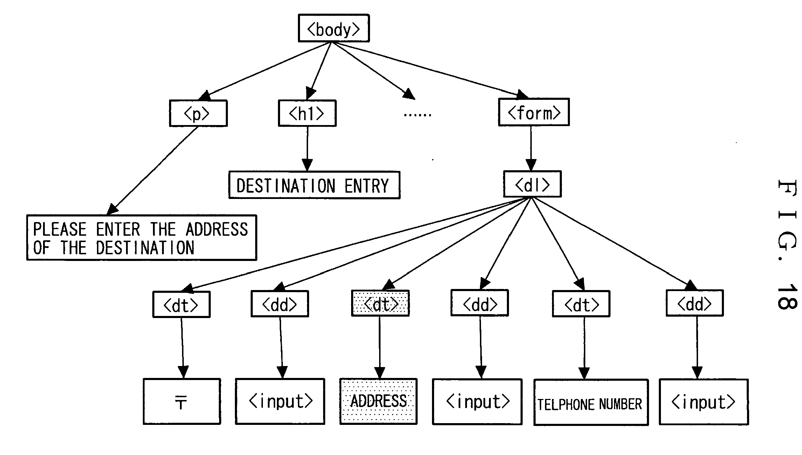

Here, the source structure analyzing unit 41 recognizes <dt> and "address" shown with half-tone dot meshing in FIG. 18 as the objects corresponding to the location information of the cursor C (see FIG. 3).

In step SC5, the source structure analyzing unit 41 shows plural objects including the objects recognized in step SC4 (<dt> and "address": see FIG. 18) collectively to the user according to the plural object selection pattern similarly to step SB5 (see FIG. 10).

Specifically, the plural objects are <dl>, <dt>, "T̅," <dd>, <input> (corresponding to the entry field on the right of "T̅" shown in FIG. 3), <dt>, "address," <dd>, <input> (corresponding to the entry field on the right of "address" shown in FIG. 3), <dt>, "telephone number," <dd>, and <input> (corresponding to the entry field on the right of "telephone number" shown in FIG. 3).

Here, the plural objects are subordinate objects of <dl> which is an upper object of <dt> and "address" (see FIG. 18).

As described above, the selection of the plural objects may be achieved with the use of the plural object selection pattern according to which plural objects structurally located at upper positions of the pertinent object or in the vicinity (at lower positions, for example) of the pertinent object are selected, or alternatively with the use of the plural object selection pattern according to which plural objects located spatially in the vicinity of the pertinent object are selected.

When the plural objects mentioned above are shown to the user, "T̅" (including the entry field on the right), "address" (including the entry field on the right), and "telephone number" (including the entry field on the right) are highlighted in the paste target information 200 shown in FIG. 3.

Then, the user determines whether the highlighted portions are desired paste areas or not.

In step SC6, the source structure analyzing unit 41 determines whether the user accepts the paste areas (highlighted portions) or not. Here, it is assumed that the result of determination is "Yes." When the result of determination in step SC6 is "No," the source structure analyzing unit 41, returning to step SC5, re-exhibits plural objects including the objects (<dt> and "address"; see FIG. 18) collectively to the user according to another plural object selection pattern.

In step SC7, the semantic analysis performing unit 42 extracts the partial paste target source information 210a (a portion enclosed by a broken line) corresponding to the plural objects accepted in step SC6 from the paste target source information 210 shown in FIG. 7.

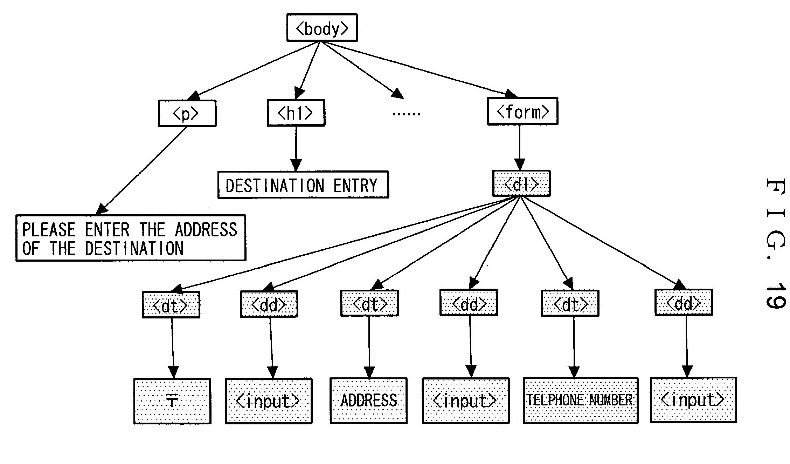

In step SC8, the semantic analysis performing unit 42 performs the semantic analysis of the objects included in the partial paste target source information 210a shown below, i.e., respective objects shown with half-tone dot meshing in FIG. 19 while referring to the dictionary database 50.
· "T̅"
· "<input type="text"name="zip_code" value="">" (note that in FIGS. 18 to 21 shown as <input>) (entry field)
· "address"
· "<input type="text" size="60"name="address" value="">" (note that in FIGS. 18 to 21 shown as <input>) (entry field)
· "telephone number"
· "<input type="text" size="15"name="tel" value="">" (note that in FIGS. 18 to 21 shown as <input>) (entry field)

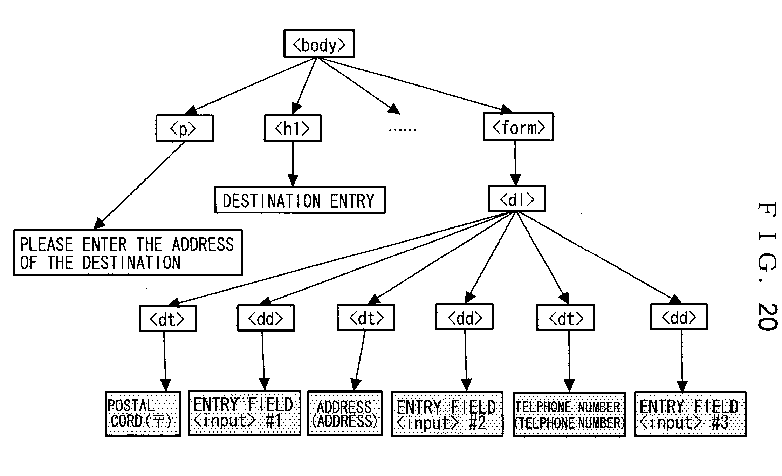

FIG. 20 shows the result of the semantic analysis of the paste targets (half-tone dot meshed portions) in step SC8. As can be seen from FIG. 20, "T" is analyzed to have a semantic attribute "postal code." Further, "<input>" is analyzed to have a semantic attribute "entry field #1." Further, "address" is analyzed to have a semantic attribute "address." Further, "<input>" is analyzed to have a semantic attribute "entry field #2." Further, "telephone number" is analyzed to have a semantic attribute "telephone number." Further, "<input>" is analyzed to have a semantic attribute "entry field #3."

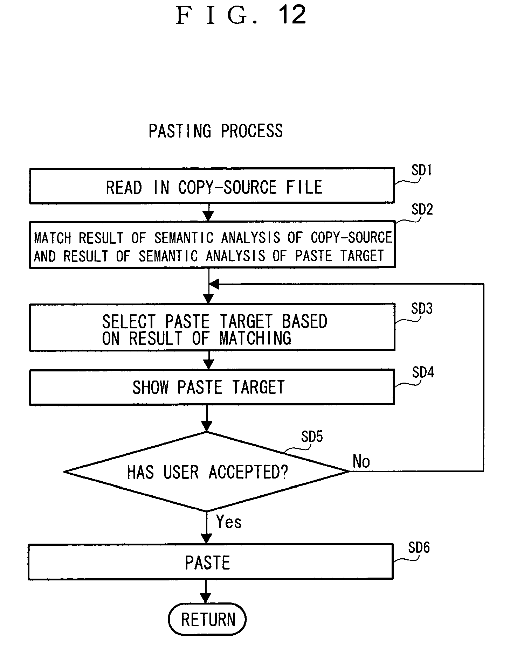

Returning to FIG. 9, in step SA5, the pasting process is executed. Specifically, in step SD1 shown in FIG. 12, the entry candidate selecting unit 71 reads in the copy source file (here, corresponding to the copy source information 100 (see FIG. 2)) specified by the user by the supplementary specifying unit 34 from the storage unit 60.

In step SD2, the paste target selecting unit 72 matches the result of the semantic analysis of the copy sources (see FIG. 16) shown below included in the copy source file mentioned above and the result of the semantic analysis of the paste targets (see FIG. 20) shown below obtained in step SC8 using the semantic attribute as a key.

### <Result of Semantic Analysis of Copy Sources>

·"100-1111"→ "postal code"
·"1-11-1 Nagata-cho Chiyoda-ku Tokyo"→"address"
·"03-3333-1111"→"telephone number"
·"Conference Room, Banquet Room, Internet Available"→"note"

### <Result of Semantic Analysis of Paste Targets>

·"T̅"→"postal code"
·"<input>"→"entry field #1"
·"address"→"address"
·"<input>"→"entry field #2"
·"telephone number"→"telephone number"
·''<input>''→''entry field #3"

Hereinbelow, the result of above matching is shown (where semantic attributes match with each other).
·"100-1111" (postal code)
·"1-11-1 Nagata-cho Chiyoda-ku Tokyo" (address)
·"03-3333-1111" (telephone number)

The result of the matching listed above shows objects to be pasted (hereinbelow also referred to as paste object). In step SD3, the paste target selecting unit 72 selects a paste target of the paste object from the result of the semantic analysis of the paste targets based on the above result of matching.

Specifically, the paste target selecting unit 72 confirms the object from the result of the semantic analysis of the paste targets using the semantic attribute of the paste object as a key. For example, for the first paste object "100-1111" (postal code), the object "T̅" (postal code) is confirmed in the result of the semantic analysis of the paste targets.

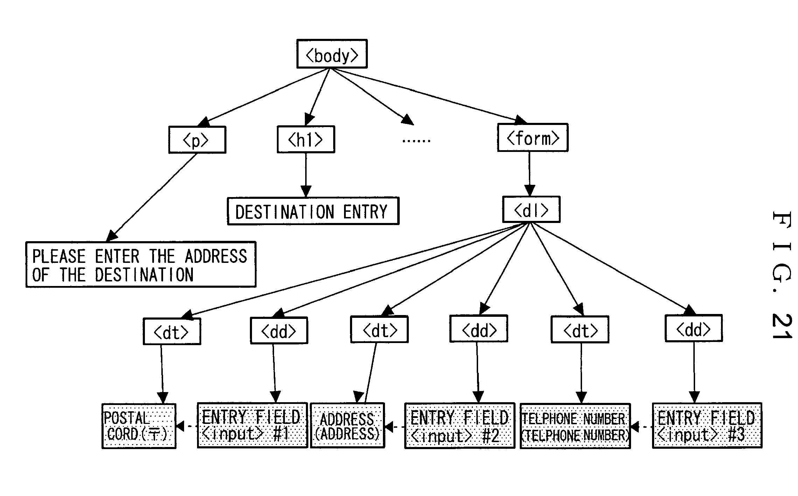

Then, the paste target selecting unit 72 selects the object "<input>" (entry field #1) located in the vicinity of the object "T̅" (postal code) from the result of the semantic analysis of the paste targets shown in FIG. 20 as the paste target of the paste object "100-1111" (postal code) (see FIG. 21). Here, "<input>" (entry field #1) corresponds to the entry field located on the right of "T̅" in the paste target information 200 (see FIG. 3).

Further, for the second paste object "1-11-1 Nagata-cho Chiyoda-ku Tokyo" (address), the object "address" (address) is confirmed from the result of the semantic analysis of the paste targets.

Then, the paste target selecting unit 72 selects the object "<input>" (entry field #2) located in the vicinity of the object "address" (address) from the result of the semantic analysis of the paste targets shown in FIG. 20 as the paste target of the paste object "1-11-1 Nagata-cho Chiyoda-ku Tokyo" (address) (see FIG. 21). Here, "<input>" (entry field #2) corresponds to the entry field on the right of "address" in the paste target information 200 (see FIG. 3).

Further, for the third paste object "03-3333-1111" (telephone number), the object "telephone number" (telephone number) is confirmed from the result of the semantic analysis of the paste targets.

Then, the paste target selecting unit 72 selects the object "<input>" (entry field #3) located in the vicinity of the object "telephone number" (telephone number) from the result of the semantic analysis of the paste targets shown in FIG. 20 as the paste target of the paste object "03-3333-1111" (telephone number) (see FIG. 21). Here, "<input>" (entry field #3) corresponds to the entry field on the right of "telephone number" in the paste target information 200 (see FIG. 3).

In step SD4, the paste target selecting unit 72 highlights three paste targets selected in step SD3 (three entry fields shown in FIG. 3) and shows the highlighted paste targets to the user as the candidates of the paste targets.

Then, the user determines whether the highlighted portions are desired paste targets or not. Here, it is assumed that the user accepts the paste targets.

In step SD5, The paste target selecting unit 72 determines whether the user accepts as described above or not. Here, it is assumed that the result of determination is "Yes." When the result of determination in step SD5 is "No," the paste target selecting unit 72 selects the paste target in step SD3 according to another selection standard and re-exhibits the paste target in step SD4.

In step SD6, the pasting unit 73 pastes the paste objects to the paste targets accepted by the user as shown in FIG. 4. Thus, "100-1111," "1-11-1 Nagata-cho Chiyoda-ku Tokyo," and "03-3333-1111" are pasted into the entry fields in the paste target information 200, respectively.

As described above, in the first embodiment, each of the plural objects copied via the user interface unit 30 is subjected to the semantic analysis by the semantic analysis performing unit 42, and the paste target which matches with the result of the semantic analysis is selected, and the plural objects are pasted to the paste targets, respectively. Thus, the copy-and-paste operation can be performed on the plural objects by a simplified operation.

Further, according to the first embodiment, one operation by the user issues a copy instruction and another one operation by the user issues a paste instruction. Thus, the copy-and-paste operation can be performed on the plural objects by an extremely simple operation of a one-click type.

Further, according to the first embodiment, since the inter-object structures of the copy source information 100 (copy module) and the paste target information 200 (paste module) described in HTML are clarified, time required for the process of the structural analysis can be reduced, resulting in a more speedy copy-and-paste operation.

Further, according to the first embodiment, the plural objects with structural association are copied from the copy source information 100 (copy module) based on the copy instruction, and the paste targets with structural association are selected from the paste target information 200 (paste module) based on the paste instruction. Hence, the copy-and-paste operation can be performed on the plural objects by a simplified operation.

Further, according to the first embodiment, when the plural candidates of the objects are shown to the user for acceptance and the user does not accept the candidates, other candidates are shown to the user until the user accepts the candidates as described with reference to step SB6 (see FIG. 10). Thus, the accuracy of the copy operation can be enhanced.

Further, according to the first embodiment, when the candidate of the paste target is shown to the user for acceptance and the user does not accept the candidate, another candidate is shown to the user until the user accepts the candidate as described with reference to step SD5 (see FIG. 12). Thus, the accuracy of the paste operation can be enhanced.

### Second Embodiment

In the first embodiment as described above, the copy-and-paste operation is completed in the display unit 20 shown in FIG. 1. The copy-and-paste operation may be, however, performed between two modules that are physically separated.

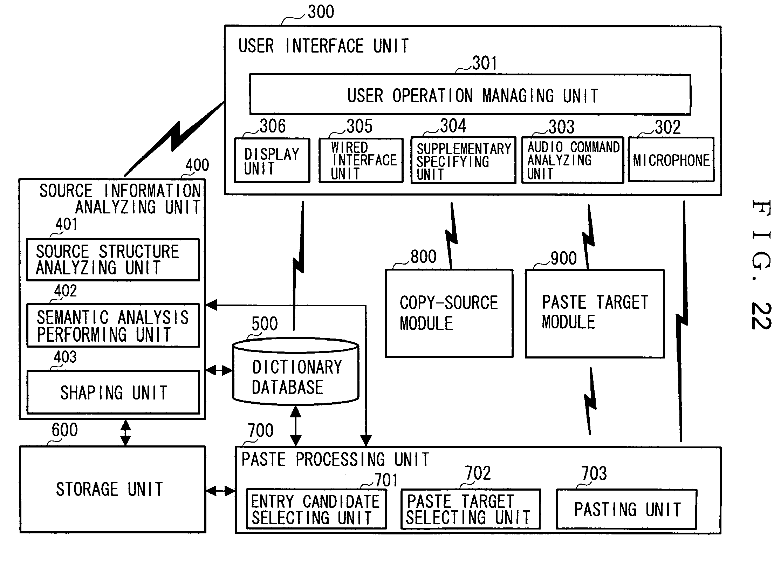

FIG. 22 is a block diagram of the structure of the second embodiment of the present invention. In FIG. 22, a copy source module 800 and a paste target module 900 are physically separated and have a function of wireless communication (including infrared communication or the like). Further, a user interface unit 300, a source information analyzing unit 400, a dictionary database 500, and a paste processing unit 700 also have a function of wireless communication.

The copy source module 800 has a function of displaying the copy source information 100 (see FIG. 2) of the copy object, storing the copy source source information 110 corresponding to the copy source information 100, and performing the wireless communication, and is, for example, a television device.

On the other hand, the paste target module 900 has a function of accepting pasting of an object copied from the copy source module 800, and is, for example, a car navigation system, a personal computer, or a microwave.

For example, when the paste target module 900 is a car navigation system, the paste target information 200 (see FIG. 3) is displayed on the paste target module 900, and the paste target source information 210 (see FIG. 7) corresponding to the paste target information 200 is stored in the paste target module 900.

Hereinbelow, the description is given based on the assumption that the copy source module 800 is a television device and the paste target module 900 is a car navigation system. A hotel list (copy source information 100) may be displayed on the copy source module 800 (television device), the user may copy information (object) related with a hotel where the user wants to go, and the user may paste the object to the paste target module 900 (car navigation system).

Returning to FIG. 22, the user interface unit 300 has a function as a man-machine interface which is operated by an audio command provided by the user, and includes a user operation managing unit 301, a microphone 302, an audio command analyzing unit 303, a supplementary specifying unit 304, a wired interface unit 305, and a display unit 306.

Further, a part or a whole of the user interface unit 300 (including a part of the supplementary specifying unit 304) is carried by the user as a remote controller. For example, the function of the remote controller is implemented in a portable information device such as an IC card, a portable terminal, and a Personal Digital Assistant (PDA).

Here, the audio command may be, for example, "store the address of OO Hotel Capitol" in the case of the copy operation. In the case of the paste operation, the audio command may be, for example, "Enter the address of the Hotel," or "Enter the Hotel" (as an abbreviated version).

The user operation managing unit 301 has a function of managing the operation by the user, and performing the wireless communication with outside. Further, the user operation managing unit 301 has a function of extracting the partial copy source source information corresponding to the object to be copied from the copy source source information 110 (see FIGS. 5 and 6). The microphone 302 has a function of converting the audio command provided by the user into an audio signal.

The audio command analyzing unit 303 has a function of analyzing the audio command based on the audio signal supplied by the microphone 302. The supplementary specifying unit 304 has a function of specifying a copy source file in the storage unit 600 described later. The wired interface unit 305 has a function of performing a wired communication such as a communication via Local Area Network (LAN). The display unit 306 is, for example, a Liquid Crystal Display (LCD).

The source information analyzing unit 400 has a function of analyzing the semantic structures of the copy source source information 110 (see FIGS. 5 and 6) and the paste target source information 210 (see FIG. 7).

In the source information analyzing unit 400, a source structure analyzing unit 401 has a function of analyzing the source structures (tree structures or the like) of the copy source source information 110 (see FIGS. 5 and 6) and the paste target source information 210 (see FIG. 7). FIG. 13 shows a result of the structural analysis of the copy source source corresponding to the copy source source information 110. FIG. 17 shows a result of the structural analysis of the paste target source corresponding to the paste target source information 210 (see FIG. 7).

A semantic analysis performing unit 402 has a function of analyzing the semantic structures of the copy source source information 110 (see FIGS. 5 and 6) and the paste target source information 210 (see FIG. 7) while referring to the dictionary database 500.

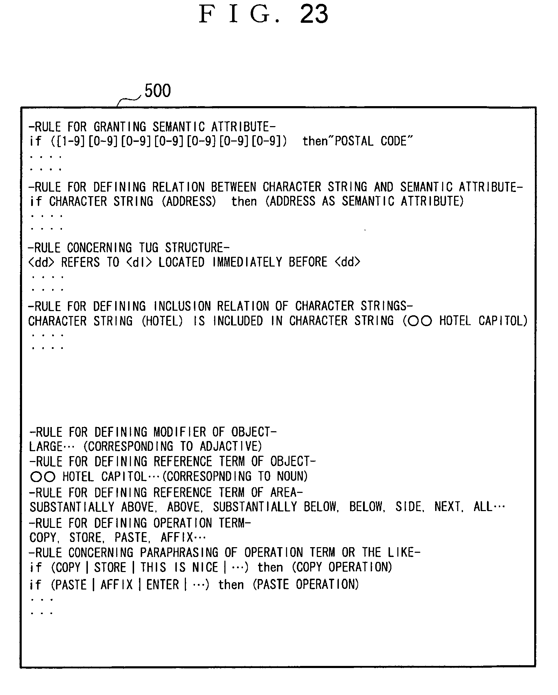

The dictionary database 500 is, as shown in FIG. 23, a database which stores respective rules described in a format of if/then, or the like. In the dictionary database 500 shown in FIG. 23, in addition to the rules in the dictionary database 50 (see FIG. 8), a rule for defining a modifier of an object, a rule for defining a reference term of the object, a rule for defining a reference term of the area, a rule for defining an operation term, a rule concerning paraphrasing of the operation term or the like are included.

The above mentioned modifier of the object, the reference term of the object, the reference term of the area, and the operation term form the audio command uttered by the user and collected by the microphone 302. The modifier of the object corresponds to an adjective such as "large." The reference term of the object corresponds to a noun such as "OO Hotel Capitol." The reference term of the area is a term for specifying the copy area or the paste area, and is "substantially above," "above," "slightly above," "substantially below," "below," "on the side," "next," "this," "that," "all," or the like. The operation term is a term defining the copy operation and the paste operation, and is, for example, "copy," "store," "paste," "affix," "enter," or the like.

The rule concerning the paraphrasing of the operation term or the like defines such that "copy," "store," "this is nice" described after "if" in the rule are paraphrased as "copy operation" as described after "then." Similarly, "paste," "affix," and "enter" described after "if" are paraphrased as "paste operation" as described after "then."

Returning to FIG. 22, a shaping unit 403 shapes the original copy source source information, the partial copy source source information, the result of the structural analysis of the copy source source, and the result of the semantic analysis of the copy source collectively into a copy source file, and stores the copy source file into the storage unit 600.

The paste processing unit 700 performs matching using the meaning as a key based on the copy source file specified by the supplementary specifying unit 304, and executes processing concerning the pasting based on the result of matching.

An entry candidate selecting unit 701 has a function of reading out the copy source file specified by the supplementary specifying unit 304 from the storage unit 600 as the entry candidate. A paste target selecting unit 702 selects the paste target of the object of the copy source based on the result of matching between the result of the semantic analysis of the copy source included in the copy source file read out by the entry candidate selecting unit 701 and the result of the semantic analysis of the paste target.

The operation of the paste target selecting unit 702 will be described later in detail. A pasting unit 703, pastes the object of the copy source to the paste target (see FIG. 3) selected by the paste target selecting unit 702 as shown in FIG. 4.

Next, the operation of the second embodiment will be described with reference to the flowcharts shown in FIGS. 9, 24, 25, and 12, and FIGS. 26 to 29. Here, it is assumed that the copy source module 800 (television device) displays the copy source information 100 (see FIG. 2). On the other hand, it is assumed that the paste target module 900 (car navigation system) displays the paste target information 200 (see FIG. 3).

In step SA1 shown in FIG. 9, the user operation managing unit 301 determines whether the user specifies the copy area using the audio command or not. Here, it is assumed that the result of determination is "No."

In step SA2, the user operation managing unit 301 determines whether the user specifies the paste area using the audio command or not. Here, it is assumed that the result of determination is "No." Thereafter, the determinations in steps SA1 and SA2 are repeated until the result of determination "Yes" is provided.

For example, in a first example of the operation according to the second embodiment, the user utters the audio command "store the address of OO Hotel Capitol" to specify the copy area in the copy source information 100 (see FIG. 2) displayed on the copy source module 800. Then, the utterance is collected by the microphone 302, and the audio command analyzing unit 303 recognizes that the user specifies the copy area based on a keyword "store." Then, the user operation managing unit 301 determines that the result of determination in step SA1 is "Yes."

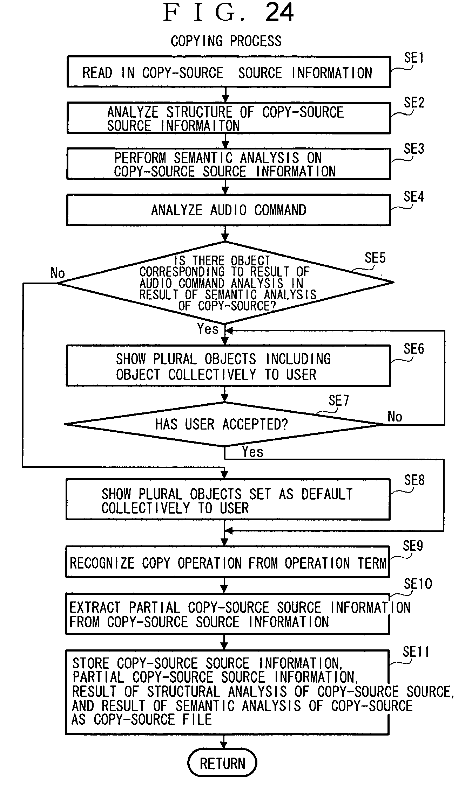

In step SA3, the copying process is executed. Specifically, in step SE1 shown in FIG. 24, the user operation managing unit 301 reads in the copy source source information 110 (see FIGS. 5 and 6) corresponding to the copy source information 100 from the copy source module 800 via the wireless communication, and delivers the same to the source information analyzing unit 400.

In step SE2, the source structure analyzing unit 401 analyzes the copy source source information 110 (see FIGS. 5 and 6), and obtains the result of the structural analysis of the copy source source given as a tree structure as shown in FIG. 13.

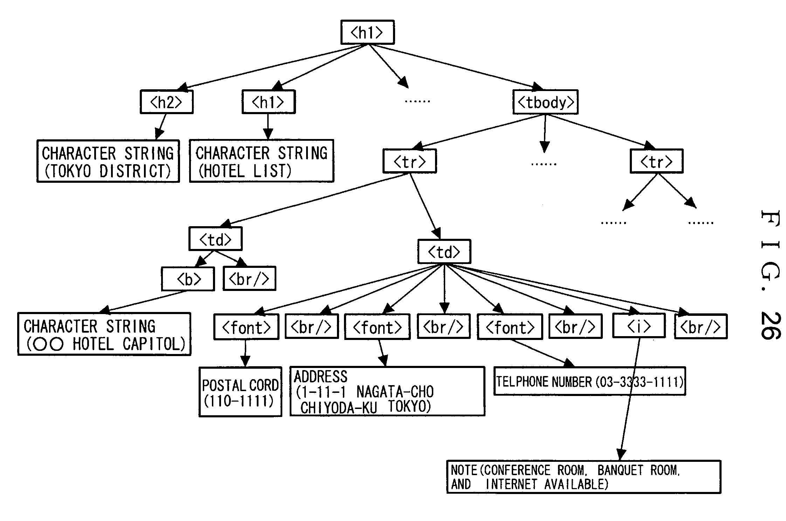

In step SE3, the semantic analysis performing unit 402 performs the semantic analysis on the respective objects in the copy source source information 110 while referring to the dictionary database 500. Further, the semantic analysis performing unit 402 delivers the result of the semantic analysis of the copy source to the user interface unit 300. The result of the semantic analysis of the copy source is shown in FIG. 26 (in boldface).

In FIG. 26, "Tokyo district" is analyzed to have the semantic attribute "character string." Further, "Hotel List" is analyzed to have the semantic attribute "character string." Further, "OO Hotel Capitol" is analyzed to have the semantic attribute "character string."

Here, "100-1111" is analyzed to have the semantic attribute "postal code." Further, "1-11-1 Nagata-cho Chiyoda-ku Tokyo" is analyzed to have the semantic attribute "address." Further, "03-3333-1111" is analyzed to have the semantic attribute "telephone number." Further, "Conference Room, Banquet Room, and Internet Available" is analyzed to have the semantic attribute "note."

In step SE4, the audio command analyzing unit 303 analyzes the audio command (here, "store the address of OO Hotel Capitol") by referring to the dictionary database 500, and obtains a result of the audio command analysis consisted of the modifier of the object, the reference term of the object, the reference term of the area, and the operation term as shown below.
· modifier of object: "of OO Hotel Capitol" ("of"+"OO Hotel Capitol")
· reference term of object: "address"
· reference term of area: not available
· operation term: store

In step SE5, the user operation managing unit 301 determines whether the result of the semantic analysis of the copy source (see FIG. 26) includes an object corresponding to the result of the audio command analysis described above.

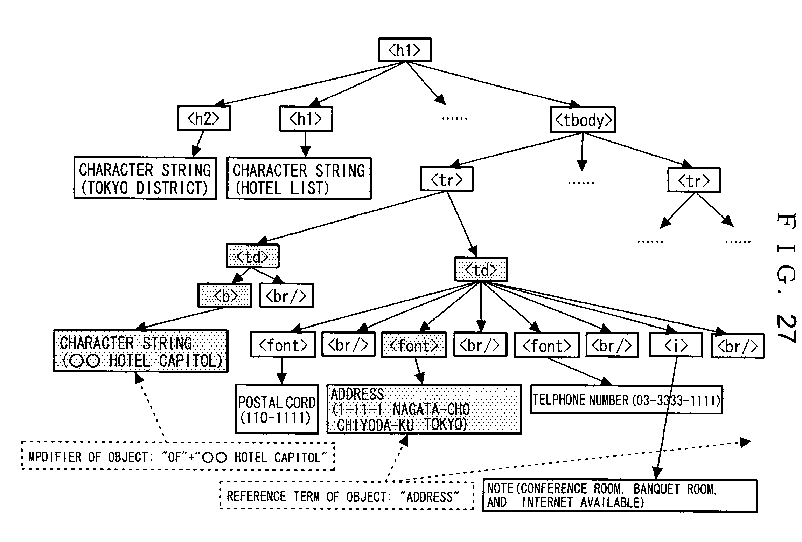

Here, since the result of the semantic analysis of the copy source includes character string (OO Hotel Capitol) and the address (1-11-1 Nagata-cho Chiyoda-ku Tokyo) as objects corresponding to both the "modifier of object "of"+"OO Hotel Capitol"" and the "reference term of object: "address"" as shown in FIG. 27, the user operation managing unit 301 gives the result of determination in step SE5 as "Yes."

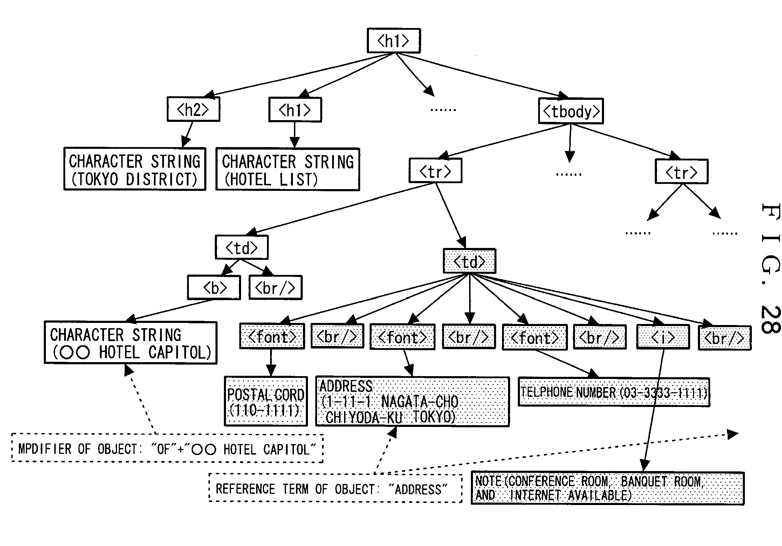

In step SE6, the user operation managing unit 301 makes the display unit 306 collectively display the plural objects (shown with half-tone dot meshing) including the object corresponding to "reference term of object: "address"" described above as shown in FIG. 28, to show the plural objects to the user.

Specifically, the plural objects mentioned above are <td>, <font>, "postal code (100-1111)," <br/>, <font>, "address (1-11-1 Nagata-cho Chiyoda-ku Tokyo)," <br/>, <font>, "telephone number (03-3333-1111)," <br/>, <i>, "note (Conference Room, Banquet Room, and Internet Available)," and <br/> shown with half-tone dot meshing in FIG. 28.

Here, the plural objects are subordinate objects of <td> which is an upper object of <font> and "address (1-11-1 Nagata-cho Chiyoda-ku Tokyo)" (see FIG. 28).

The selection of the plural objects may be achieved with the use of the plural object selection pattern according to which the plural objects located structurally at upper positions of the pertinent object or in the vicinity (at lower position, for example) of the pertinent object are selected, or alternatively with the use of the plural object selection pattern according to which the plural objects located spatially in the vicinity of the pertinent object are selected as described above.

Then, the user determines whether the shown plural objects ("100-1111," "1-11-1 Nagata-cho Chiyoda-ku Tokyo," and "03-3333-1111") are desired copy areas or not. Here, it is assumed that the user gives the result of determination "Yes" and accepts the copy areas using the supplementary specifying unit 304.

In step SE7, the user operation managing unit 301 determines whether the user accepts as described above or not. Here, it is assumed that the user operation managing unit 301 gives the result of determination "Yes." When the result of determination in step SE7 is "No," the user operation managing unit 301 selects the plural objects according to another plural object selection pattern and re-exhibits the selected plural object to the user in step SE5.

When the result of determination in step SE5 is "No," the user operation managing unit 301 shows the plural objects which are set as default (all objects, for example) in the result of the semantic analysis of the copy source (see FIG. 27) collectively to the user in step SE8.

In step SE9, the user operation managing unit 301 recognizes that the operation the user desires is the copy operation based on the operation term "store" obtained as the result of the analysis in step SE4 while referring to the dictionary database 500 (see FIG. 23).

In step SE10, the user operation managing unit 301 extracts the partial copy source source information 110a corresponding to the object to be copied from the copy source source information 110 (see FIGS. 5 and 6) read in in step SE1, and delivers the extracted information to the source information analyzing unit 400. The partial copy source source information 110a corresponds to the plural objects the user accepts in step SE7 (or the plural objects set as the default in step SE8).

In step SE11, the shaping unit 403 shapes the original copy source source information 110, the partial copy source source information 110a (see FIG. 5) delivered from the user interface unit 300, the result of the structural analysis of the copy source source (see FIG. 13), the result of the semantic analysis of the copy source shown in FIG. 26 (corresponding to the portion with half-tone dot meshing in FIG. 28) collectively into a copy source file and store the copy source file into the storage unit 600.

Then, for example, when the user utters an audio command "Enter the address of the hotel" to specify the paste area in the paste target information 200 (see FIG. 3) displayed on the paste target module 900, the audio command is first collected by the microphone 302 and then recognized as representing the specification of the paste area based on the keyword "enter" by the audio command analyzing unit 303. Thus, the user operation managing unit 301 gives a result of determination "Yes" in step SA2 shown in FIG. 9.

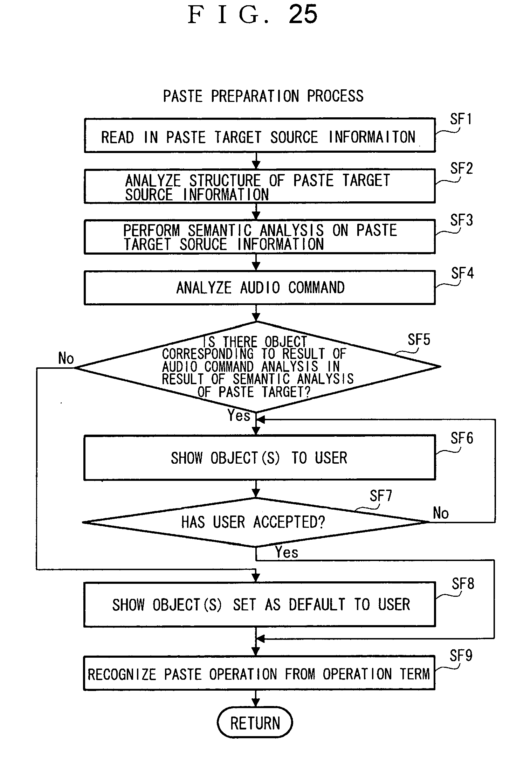

In step SA4, the paste preparation process is executed. Specifically, in step SF1 shown in FIG. 25, the user operation managing unit 301 reads in the paste target source information 210 (see FIG. 7) corresponding to the paste target information 200 from the paste target module 900 via the wireless communication and delivers the read paste target source information 210 to the source information analyzing unit 400.

In step SF2, the source structure analyzing unit 401 analyzes the paste target source information 210 (see FIG. 7) and obtains the result of the structural analysis of the paste target source given as a tree structure as shown in FIG. 17.

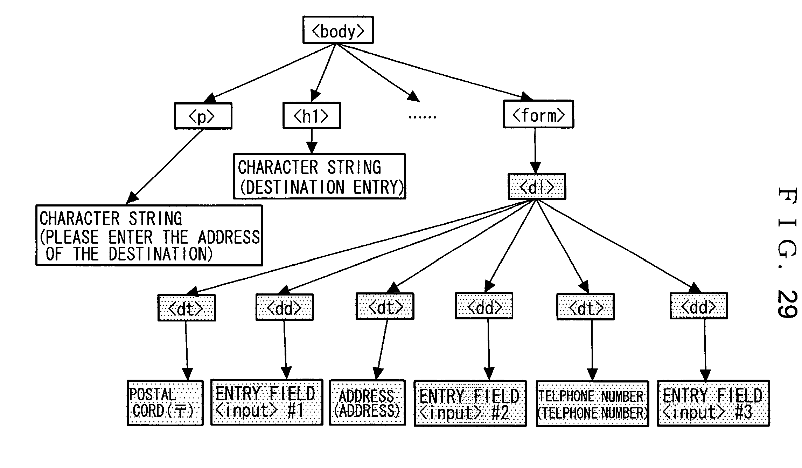

In step SF3, the semantic analysis performing unit 402 performs the semantic analysis of the respective objects in the paste target source information 210 while referring to the dictionary database 500. Further, the semantic analysis performing unit 402 delivers the result of the semantic analysis of the paste target to the user interface unit 300. The result of the semantic analysis of the paste target is shown in FIG. 29 (in boldface).

In FIG. 29, an utterance "Please enter the address of destination" is analyzed to have a semantic attribute "character string." Further, "Enter the destination" is analyzed to have a semantic attribute "character string." Further, "T̅" is analyzed to have a semantic attribute "postal code."

Here, <input> (corresponding to the entry field on the right of "T̅" shown in FIG. 3) is analyzed to have the semantic attribute "entry field #1." Further, "address" is analyzed to have the semantic attribute "address." Further, <input> (corresponding to the entry field on the right of "address" shown in FIG. 3) is analyzed to have the semantic attribute "entry field #2." Further, "telephone number" is analyzed to have the semantic attribute "telephone number." Further, <input> (corresponding to the entry field on the right of "telephone number" shown in FIG. 3) is analyzed to have the semantic attribute "entry field #3."

In step SF4, the audio command analyzing unit 303 analyzes the audio command (here "Enter the address of the hotel") by referring to the dictionary database 500, and obtains a result of the audio command analysis including the modifier of the object, the reference term of the object, the reference term of the area, and the operation term as shown below.
· modifier of object: "of the hotel" ("of" + "the hotel")
· reference term of object: "address"
· reference term of area: not available
· operation term: enter

In step SF5, the user operation managing unit 301 determines whether the result of the semantic analysis of the paste target (see FIG. 29) includes an object corresponding to the result of the audio command analysis described above.

Here, since the result of the semantic analysis of the paste target includes an address (address) as the object corresponding to "reference term of object: "address"," the user operation managing unit 301 gives a result of determination "Yes" in step SF5.

In step SF6, the user operation managing unit 301 makes the display unit 306 collectively display the plural objects (shown with a half-tone dot meshing) including the object corresponding to the address (address) described above as shown in FIG. 29, to show the plural objects to the user.

Specifically, the plural objects mentioned above are <dl>, <dt>, "T̅," <dd>, <input> (corresponding to the entry field on the right of "T̅" shown in FIG. 3), <dt>, "address," <dd>, <input> (corresponding to the entry field on the right of "address" shown in FIG. 3), <dt>, "telephone number," <dd>, and <input> (corresponding to the entry field on the right of "telephone number" shown in FIG. 3) shown with half-tone dot meshing in FIG. 29.

Here, the plural objects are subordinate objects of <dl> which is an upper object of <dt> and "address."

The selection of the plural objects may be achieved with the use of the plural object selection pattern according to which the plural objects located structurally at upper positions of the pertinent object or in the vicinity (at lower position, for example) of the pertinent object are selected, or alternatively with the use of the plural object selection pattern according to which the plural objects located spatially in the vicinity of the pertinent object are selected as described above.

Then, the user determines whether the shown plural objects are desired paste areas or not. Here, it is assumed that the user gives the result of determination "Yes" and accepts the paste area using the supplementary specifying unit 304.

In step SF7, the user operation managing unit 301 determines whether the user accepts as described above or not. Here, it is assumed that the user operation managing unit 301 gives a result of determination "Yes." When the result of determination in step SF7 is "No," the user operation managing unit 301 selects the plural objects according to another plural object selection pattern and re-exhibits the selected plural objects to the user in step SF6.

When the result of determination in step SF5 is "No," the user operation managing unit 301 shows the plural objects set as default (all objects, for example) from the result of the semantic analysis of the paste target (see FIG. 29) collectively to the user.

In step SF9, the user operation managing unit 301 recognizes that the operation the user desires is the paste operation according to the operation term "enter" obtained as a result of the analysis in step SF4 while referring to the dictionary database 500 (see FIG. 23).

Returning to FIG. 9, in step SA5, the pasting process is executed. Specifically, in step SD1 shown in FIG. 12, the entry candidate selecting unit 701 reads in the copy source file (here, corresponding to the copy source information 100 (see FIGS. 5 and 6)) specified by the user by the supplementary specifying unit 304 from the storage unit 600.

In step SD2, the paste target selecting unit 702 matches the result of the semantic analysis of the copy source (see FIG. 28) shown below included in the copy source file mentioned above and the result of the semantic analysis of the paste target (see FIG. 29) shown below using the semantic attributes as a key.

### <Result of Semantic Analysis of Copy Source>

· "100-1111" → "postal code"
· "1-11-1 Nagata-cho Chiyoda-ku Tokyo" → "address"
· "03-3333-1111" → "telephone number"
· "Conference Room, Banquet Room, and Internet Available" → "note"

### <Result of Semantic Analysis of Paste Target>

· "T̅" → "postal code"
· "<input>" → "entry field #1"
· "address" → "address"
· "<input>" → "entry field #2"
. "telephone number" → "telephone number"
· "<input>" → "entry field #3"

Shown below is the result of matching (where the semantic attributes match with each other) as described above.
· "100-1111" (postal code)
· "1-11-1 Nagata-cho Chiyoda-ku Tokyo" (address)
· "03-3333-1111" (telephone number)

The result of matching shown above represents the objects to be pasted (hereinbelow referred to as paste object). In step SD3, the paste target selecting unit 702 selects the paste target of the paste object based on the result of matching described above from the result of the semantic analysis of the paste target.

Specifically, the paste target selecting unit 702 confirms the objects from the result of the semantic analysis of the paste target using the semantic attribute of the paste object as a key. For example, for the first paste object "100-1111" (postal code), the object "T̅" (postal code) is confirmed from the result of the semantic analysis of the paste target.

Then, the paste target selecting unit 702 selects the object "<input>" (entry field #1) located in the vicinity of the object "T̅" (postal code) mentioned above as the paste target of the paste object "100-1111" (postal code) from the result of the semantic analysis of the paste target shown in FIG. 29. Here, "<input>" (entry field #1) corresponds to the entry field located on the right and in the vicinity of "T̅" in the paste target information 200 (see FIG. 3).

Further, for the second paste object "1-11-1 Nagata-cho Chiyoda-ku Tokyo" (address), the object "address" (address) is confirmed from the result of the semantic analysis of the paste target.

Then, the paste target selecting unit 702 selects the object "<input>" (entry field #2) located in the vicinity of the object "address" (address) mentioned above as the paste target of the paste object "1-11-1 Nagata-cho Chiyoda-ku Tokyo" (address) from the result of the semantic analysis of the paste target shown in FIG. 29. Here, "<input>" (entry field #2) corresponds to the entry field located on the right and in the vicinity of the "address" in the paste target information 200 (see FIG. 3).

Further, for the third paste object "03-3333-1111" (telephone number), the object "telephone number" (telephone number) is confirmed from the result of the semantic analysis of the paste target.

Then the paste target selecting unit 702 selects the object "<input>" (entry field #3) located in the vicinity of the object "telephone number" (telephone number) mentioned above as the paste target of the paste object "03-3333-1111" (telephone number) from the result of the semantic analysis of the paste target shown in FIG. 29. Here, "<input>" (entry field #3) corresponds to the entry field located on the right and in the vicinity of "telephone number" in the paste target information 200 (see FIG. 3).

In step SD4, the paste target selecting unit 702 makes the display unit 306 or the like display three paste targets (three entry fields shown in FIG. 3) selected in step SD3 via wireless communication, and highlights and exhibits the same to the user as the candidates of the paste targets.

Then, the user determines whether the highlighted portions are desired paste targets or not. Here, it is assumed that the user accepts the paste targets.

In step SD5, the paste target selecting unit 702 determines whether the user accepts as described above or not. Here, the result of determination is "Yes." When the result of determination in step SD5 is "No," the paste target selecting unit 702 selects the paste target according to another selection standard in step SD3 and re-exhibits the selected paste target in step SD4.

In step SD6, the pasting unit 703, as shown in FIG. 4, pastes the paste objects to the paste target accepted by the user. Then, in respective entry fields of the paste target information 200, the objects "100-1111," "1-11-1 Nagata-cho Chiyoda-ku Tokyo," and "03-3333-1111" are pasted.

Next, a second example of the operation of the second embodiment will be described. When the user utters the audio command "store substantially above" to specify the copy area in the copy source information 100 (see FIG. 2) displayed on the copy source module 800, for example, the audio command is collected by the microphone 302 and recognized as representing the specification of the copy area based on the keyword "store" by the audio command analyzing unit 303. Then the user operation managing unit 301 gives a result of determination in step SA1 as "Yes."

In step SA3, the copying process is executed. Specifically, in step SE1 shown in FIG. 24, the user operation managing unit 301 reads in the copy source source information 110 (see FIGS. 5 and 6) corresponding to the copy source information 100 from the copy source module 800 via wireless communication and delivers the read information to the source information analyzing unit 400.

In step SE2, the source structure analyzing unit 401 analyzes the copy source source information 110 (see FIGS. 5 and 6) and obtains the result of the structural analysis of the copy source source given as a tree structure as shown in FIG. 13.

In step SE3, the semantic analysis performing unit 402 performs the semantic analysis of the respective objects in the copy source source information 110 referring to the dictionary database 500. Further, the semantic analysis performing unit 402 delivers the result of the semantic analysis of the copy source shown in FIG. 26 to the user interface unit 300.

In step SE4, the audio command analyzing unit 303 analyzes the audio command (here, "store substantially above") referring to the dictionary database 500, and obtains the result of the audio command analysis including the modifier of the object, the reference term of the object, the reference term of the area, and the operation term as shown below.
· modifier of object: not available
· reference term of object: not available
· reference term of area: substantially above
· operation term: store

In step SE5, the user operation managing unit 301 determines whether the result of the semantic analysis of the copy source (see FIG. 26) includes an object corresponding to the result of the audio command analysis described above.

Here, since the result of the semantic analysis of the copy source includes the postal code (100-1111), the address (1-11-1 Nagata-cho Chiyoda-ku Tokyo), the telephone number (03-3333-1111) or the like located at substantially upper levels shown in FIG. 26 as the objects corresponding to the "reference term of area: substantially above"," as shown in FIG. 27, the user operation managing unit 301 gives a result of determination in step SE5 as "Yes."

In step SE6, the user operation managing unit 301, makes the display unit 306 collectively display the plural objects (shown with half-tone dot meshing) including the objects corresponding to the "reference term of area: "substantially above"" as shown in FIG. 28, and shows the plural objects to the user.

In step SE7, the user operation managing unit 301 determines whether the user accepts as described above or not. Here, it is assumed that the user operation managing unit 301 gives a result of determination "Yes." Hereinafter, similarly to the operation described above, the process from step SE9 to SE11 is executed.

Further, for example, when the user utters the audio command "enter all" to specify the paste area in the paste target information 200 (see FIG. 3) displayed on the paste target module 900, the audio command is collected by the microphone 302, and recognized as representing the specification of the paste area based on the keyword "enter" by the audio command analyzing unit 303. Then, the user operation managing unit 301 gives a result of determination in step SA2 shown in FIG. 9 as "Yes".

In step SA4, the paste preparation process is executed. Specifically, in step SF1 shown in FIG. 25, the user operation managing unit 301 reads in the paste target source information 210 (see FIG. 7) corresponding to the paste target information 200 from the paste target module 900 via wireless communication and delivers the read information to the source information analyzing unit 400.

In step SF2, the source structure analyzing unit 401 analyzes the paste target source information 210 (see FIG. 7) and obtains the result of the structural analysis of the paste target source given as a tree structure as shown in FIG. 17.

In step SF3, the semantic analysis performing unit 402 performs the semantic analysis of the respective objects of the paste target source information 210 while referring to the dictionary database 500. Further, the semantic analysis performing unit 402 delivers the result of the semantic analysis of the paste target to the user interface unit 300. The result of the semantic analysis of the paste target is shown in FIG. 29 (in boldface).

In step SF4, the audio command analyzing unit 303 analyzes the audio command (here, "enter all") referring to the dictionary database 500, and obtains the result of the audio command analysis including the modifier of the object, the reference term of the object, the reference term of the area, and the operation term as shown below.
· modifier of object: not available
· reference term of object: not available
· reference term of area: all
· operation term: enter

In step SF5, the user operation managing unit 301 determines whether the result of the semantic analysis of the paste target (see FIG. 29) includes an object corresponding to the result of the audio command analysis described above.

Here, since the result of the semantic analysis of the paste target includes "postal code" (T̅), "address" (address), and "telephone number" (telephone number) as the objects corresponding to the "reference term of area: "all"," the user operation managing unit 301 gives the result of determination in step SF5 as "Yes."

In step SF6, the user operation managing unit 301 makes the display unit 306 display the plural objects (shown with half-tone dot meshing) including "postal code" (T), "address" (address), and "telephone number" (telephone number) described above as shown in FIG. 29 collectively and shows the same to the user.

Then, the user determines whether the shown plural objects are desired paste areas or not. Here, it is assumed that the user gives a result of determination as "Yes" and accepts the paste areas using the supplementary specifying unit 304.

In step SF7, the user operation managing unit 301 determines whether the user accepts as described above or not. Here, it is assumed that the user operation managing unit 301 gives the result of determination as "Yes."

In step SF9, the user operation managing unit 301 recognizes that the operation the user desires is the paste operation according to the operation term "enter" obtained as a result of analysis in step SF4 while referring to the dictionary database 500 (see FIG. 23). Thereafter, the pasting process mentioned earlier is executed.

In the second embodiment, the specification of the copy area and the paste area is realized only by the voice via the user interface unit 300. As a modification of the second embodiment, however, the specification of the copy area and the paste area may be realized by the voice and a pointer manipulated by the user. The pointer is, for example, a pointer employing Radio Frequency Identification (RFID) and implemented in the above mentioned remote controller (IC card, portable terminal, PDA or the like).

In the modification of the second embodiment, the supplementary specifying unit 304 shown in FIG. 22 may have a function of the pointer. Specifically, the supplementary specifying unit 304 has a function to specify the copy area including an object (character string or the like) to be copied from the copy source information 100 (see FIG. 2) displayed on the copy source module 800 according to the manipulation by the user.

Further, the supplementary specifying unit 304 has a function of specifying the paste area to which the object is to be pasted from the paste target information 200 (see FIG. 3) displayed on the paste target module 900 according to the manipulation by the user.

Next, the operation according to the modification of the second embodiment will be described. For example, the user specifies the copy area corresponding to the cursor C using the supplementary specifying unit 304 in the copy source information 100 (see FIG. 2) displayed on the copy source module 800, and at the same time the user utters the audio command "This is nice." Then, the uttered audio command is collected by the microphone 302 and recognized as representing the specification of the copy area based on the keyword "This is nice," by the audio command analyzing unit 303.

Then, the copying process is executed. Specifically, the user operation managing unit 301 reads in the copy source source information 110 (see FIGS. 5 and 6) corresponding to the copy source information 100 from the copy source module 800 via wireless communication and delivers the read information to the source information analyzing unit 400.

Then, the source structure analyzing unit 401 analyzes the copy source source information 110 (see FIGS. 5 and 6) and obtains the result of the structural analysis of the copy source source given as a tree structure as shown in FIG. 13.

Then, the semantic analysis performing unit 402 performs the semantic analysis of the respective objects in the copy source source information 110 while referring to the dictionary database 500. Further, the semantic analysis performing unit 402 delivers the result of the semantic analysis of the copy source shown in FIG. 26 to the user interface unit 300.

Then, the audio command analyzing unit 303 analyzes the audio command (here, "This is nice") by referring to the dictionary database 500, and obtains the result of the audio command analysis including the operation term shown below.

### · operation term: This is nice

Then, the user operation managing unit 301 acquires the location information of the cursor C in the copy source information 100 shown in FIG. 2. The user operation managing unit 301 further recognizes an object corresponding to the location information in the result of the structural analysis of the copy source source shown in FIG. 28.

Here, the user operation managing unit 301 recognizes <font> and "1-11-1 Nagata-cho Chiyoda-ku Tokyo" as the objects corresponding to the location information of the cursor C (see FIG. 2).

Then, the user operation managing unit 301 makes the display unit 306 display the plural objects (shown with half-tone dot meshing) including the objects shown above (<font> and "1-11-1 Nagata-cho Chiyoda-ku Tokyo": see FIG. 28) collectively and shows the same to the user.

Then, when the user accepts the objects, the user operation managing unit 301 recognizes that the operation the user desires is the copy operation based on the operation term "This is nice" while referring to the dictionary database 500 (see FIG. 23).

Then, the user operation managing unit 301 extracts the partial copy source source information 110a corresponding to the object to be copied from the copy source source information 110 (see FIGS. 5 and 6) and delivers the extracted information to the source information analyzing unit 400.

Then, the shaping unit 403 shapes the original copy source source information 110, the partial copy source source information 110a (see FIG. 5) delivered from the user interface unit 300, the result of the structural analysis of the copy source source (see FIG. 13), and the result of the semantic analysis of the copy source (corresponding to the portion with half-tone dot meshing in FIG. 28) shown in FIG. 26 collectively into a copy source file, and stores the copy source file into the storage unit 600.

In the paste preparation process, similarly to the copying process described above, the paste area is specified with the use of the voice and the pointer (supplementary specifying unit 304) employed for the specification by the user.

As described above, according to the second embodiment, the plural objects are copied from the copy source module 800 according to the copy instruction (audio command) by the user, and the paste target is selected from the paste target module 900 according to the paste instruction (audio command) by the user. Thus, the copy-and-paste operation can be performed on plural objects by a simplified operation among different modules (copy source module 800, paste target module 900).

Further, according to the second embodiment, the user interface unit 300 (instruction device) which has a communication function between the copy source module 800 and the paste target module 900 gives the copy instruction and the paste instruction according to the audio command. Hence, the copy-and-paste operation can be performed on plural objects by a simplified operation among different modules (copy source module 800, paste target module 900).

Still further, according to the second embodiment, the user can give the copy instruction and the paste instruction by his/her voice. Hence, the copy-and-paste operation can be performed on plural objects by a simplified operation only by the user's voice.

Still further, according to the second embodiment, the copy instruction and the paste instruction are provided via the user's voice and the pointer manipulated by the user. Hence, the copy-and-paste operation can be performed on plural objects by a simplified operation and the pointer supplements the ambiguity of the audio.

### Third Embodiment

In the first and the second embodiments as described above, the copy source source information and the paste target source information given as tree structures in the HTML or the like are employed. In place of information having the tree structure, a collection of objects (which is not form the tree structure) may be employed as the copy source source information (paste target source information). A semantic distance between the copy source object and the paste target object is calculated and the copy-and-paste operation is performed on a combination with a short semantic distance. Hereinbelow, such structure will be described as the third embodiment.

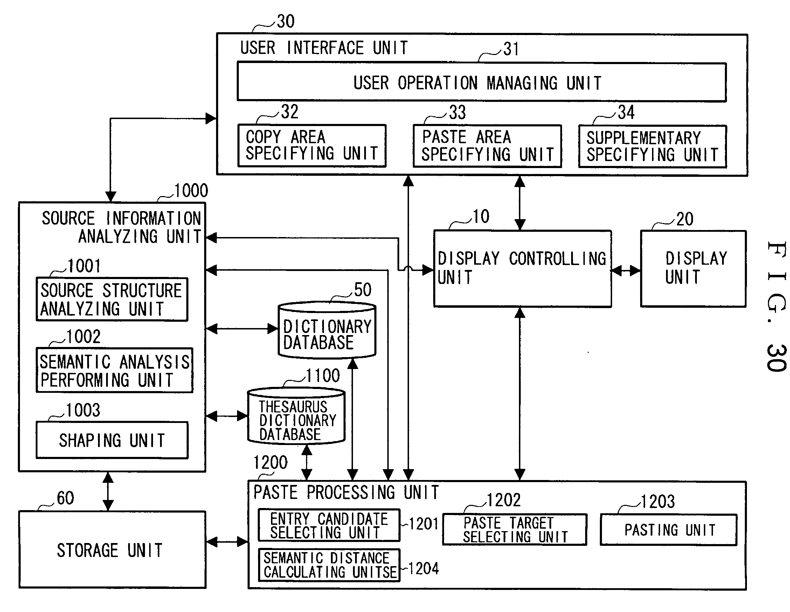

FIG. 30 is a block diagram of a structure of the third embodiment of the present invention. In FIG. 30, elements corresponding to the elements shown in FIG. 1 are denoted by the same reference characters. In FIG. 30, in place of the source information analyzing unit 40 and the paste processing unit 70 shown in FIG. 1, a source information analyzing unit 1000 and a paste processing unit 1200 are provided, and a thesaurus dictionary database 1100 is newly provided.

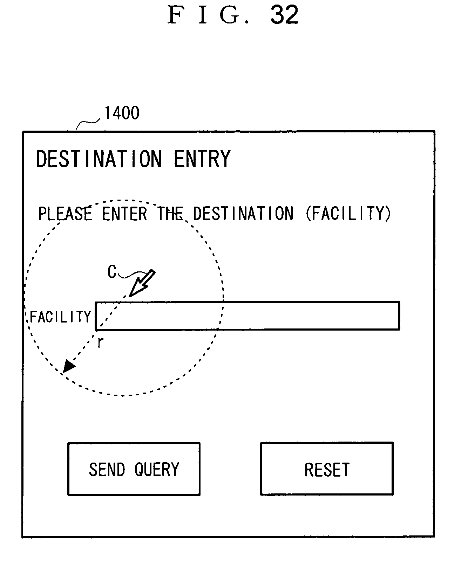

Further in the third embodiment, the display unit 20 displays copy source information 1300 (see FIG. 31) and paste target information 1400 (see FIG. 32) that do not have a tree structure.

The copy source information 1300 show in FIG. 31 is information of copy sources in the copy-and-paste operation (here, copying includes cutting, the same applies below), and described in text alone. Hence, the copy source information 1300 is a sequence of information which does not have a tree structure dissimilar to the copy source information 100 (see FIG. 2) described in the HTML.

The copy source information 1300 is a hotel list (Tokyo district) including objects (texts) such as the name of the hotels (OO Hotel Capitol or the like), the postal codes ("100-1111" or the like), the addresses (1-11-1 Nagata-cho Chiyoda-ku Tokyo" or the like), the telephone numbers ("03-3333-1111" or the like), and notes ("Conference Room, Banquet Room, and Internet Available" or the like).

On the other hand, the paste target information 1400 shown in FIG. 32 is information of paste targets in the copy-and-paste operation (here, copying includes cutting, the same applies below), and described in text alone. Hence, the paste target information 1400, similarly to the copy source information 1300, is a sequence of information which does not have a tree structure dissimilar to the paste target information 200 (see FIG. 3) described in the HTML.

The paste target information 1400 includes objects (texts) such as "destination entry," "Please enter the destination (facility)," "Facility," "Entry field of Facility," "Send Query," and "Reset."

The source information analyzing unit 1000 has a function of performing morphological analysis, structural analysis, and analysis of semantic structure on the copy source information 1300 (see FIG. 31) and the paste target information 1400 (see FIG. 32), and includes a source structure analyzing unit 1001, a semantic analysis performing unit 1002, and a shaping unit 1003.

In the source information analyzing unit 1000, the source structure analyzing unit 1001 has a function of performing the morphological analysis and the structural analysis on the copy source information 1300 (see FIG. 31) and the paste target information 1400 (see FIG. 32). Further, the source information analyzing unit 1000 extracts partial copy source source information and partial paste target source information corresponding to area range (a circle with a radius r shown in FIGS. 31 and 32, for example) specified by the user in the copy source information 1300 and the paste target information 1400.

The semantic analysis performing unit 1002 has a function of analyzing the semantic structure of the partial copy source source information and the partial paste target source information while referring to the dictionary database 50.

The shaping unit 1003 shapes the original copy source source information, the partial copy source source information, and the result of the semantic analysis of the copy source into a copy source file collectively, and stores the copy source file in the storage unit 60.

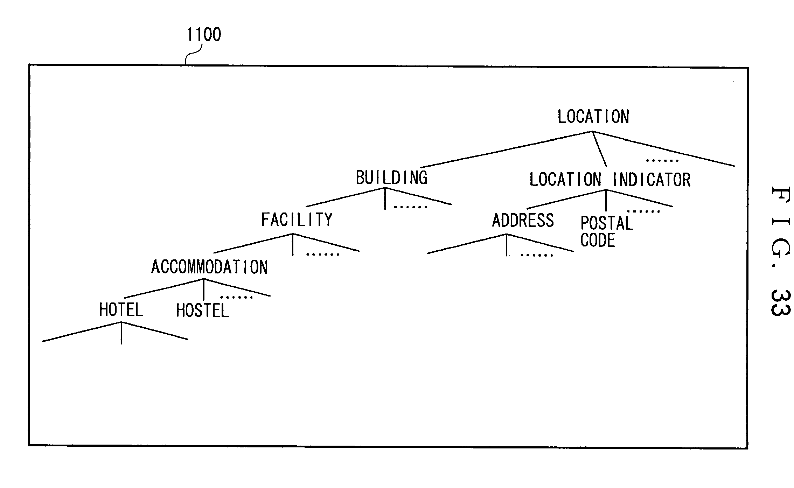

The thesaurus dictionary database 1100 is a database which stores a systematic dictionary of synonyms and convertible terms which are to be referred to in fuzzy search. The thesaurus dictionary database 1100 is shown in FIG. 33.

As shown in FIG. 33, in the thesaurus dictionary database 1100, "location," for example, is defined at the top of the hierarchical structure, and "building," "location indicator," or the like are defined as the synonyms at the lower level of the "location". At the lower level of the "building," "facility," or the like is defined. Further, at the lower level of the "facility," "accommodation," "hotel," or the like are defined. Further, at the lower level of the "location indicator," "address," "postal code," or the like are defined.

Returning to FIG. 30, the paste processing unit 1200 has a function of calculating the semantic distance between each object in the partial copy source source information and each object in the partial paste target source information based on the thesaurus dictionary database 1100 (see FIG. 33), and pasting the object in the copy source into the object in the paste target (entry field) when a combination has a short semantic distance.

The entry candidate selecting unit 1201 has a function of reading out the copy source file specified by the supplementary specifying unit 34 as the entry candidate from the storage unit 60. The paste target selecting unit 1202 selects the paste target of the object of the copy source based on the result of calculation of the semantic distance mentioned above. The operation of the paste target selecting unit 1202 will be described later in detail.

The pasting unit 1203 pastes the object of the copy source into the paste target selected by the paste target selecting unit 1202. The semantic distance calculating unit 1204 calculates the semantic distance between the objects using the thesaurus dictionary database 1100.

Next, the operation of the third embodiment will be described with reference to the flowcharts shown in FIGS. 9, 34 to 36. Here, it is assumed that the display unit 20 displays the copy source information 1300 (see FIG. 31) and the paste target information (see FIG. 32).

In step SA1 shown in FIG. 9, the source structure analyzing unit 1001 determines whether the user specifies the copy area in the copy source information 1300 (see FIG. 31) using the copy area specifying unit 32 or not. Here, it is assumed that the result of determination is "No."

In step SA2, the source structure analyzing unit 1001 determines whether the user specifies the paste area in the paste target information 1400 (see FIG. 32) using the paste area specifying unit 33 or not. Here, it is assumed that the result of determination is "No." Thereafter, until the result of determination is "Yes," the determinations in steps SA1 and SA2 are repeatedly performed.

Once the user specifies the copy area (circle with a radius r around the cursor C) corresponding to the cursor C using the copy area specifying unit 32 in the copy source information 1300 shown in FIG. 31, the source structure analyzing unit 1001 gives the result of determination in step SA1 as "Yes." In step SA3, the copying process is executed.

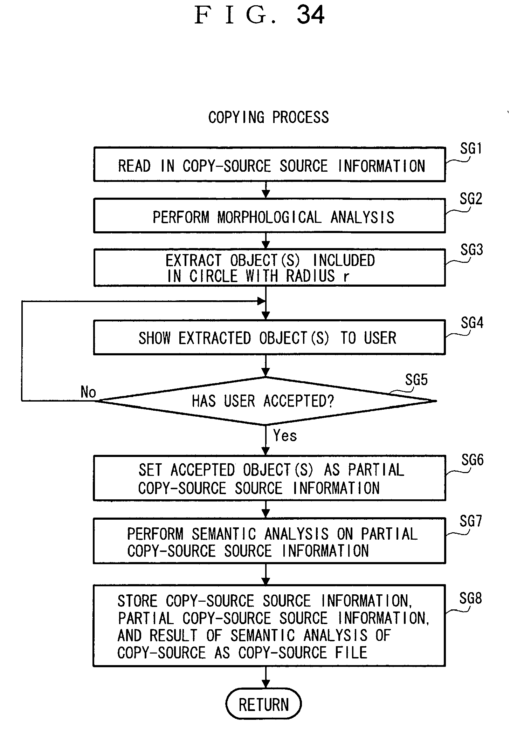

Specifically, in step SG1 shown in FIG. 34, the source structure analyzing unit 1001 reads in the copy source information 1300 (see FIG. 31) from the display controlling unit 10 via the user interface unit 30.

In step SG2, the source structure analyzing unit 1001 executes the morphological analysis on the copy source information 1300, and extracts respective objects (object). In step SG3, the source structure analyzing unit 1001 extracts the objects included in the circle of radius r specified by the user (see FIG. 31). Here, two objects, i.e., "OO Hotel Capitol" and "OO Excel Hotel Tokyo" are extracted.

In step SG4, the source structure analyzing unit 1001 shows the objects extracted in step SG3 ("OO Hotel Capitol" and "OO Excel Hotel Tokyo") to the user.

Further, when the objects as described above are shown to the user, "OO Hotel Capitol" and "OO Excel Hotel Tokyo" in the copy source information 1300 shown in FIG. 31 are highlighted as indicated by the half-tone dot meshing.

Then, the user determines whether the highlighted portions are desired copy areas or not. The determination is made according to a predetermined standard, i.e., whether the object to be pasted into the paste target information 1400 (see FIG. 32) is included in the highlighted portions described above.

Here, if the object "OO Hotel Capitol" alone is an object to be pasted, the user does not accept the highlighted objects by manipulating the supplementary specifying unit 34.

In step SG5, the source structure analyzing unit 1001 determines whether the user accepts as described above or not. Here, it is assumed that the source structure analyzing unit 1001 gives the result of determination "No." In step SG4, the source structure analyzing unit 1001 deletes the object "OO Excel Hotel Tokyo," for example, among the shown objects according to another exhibition pattern, and re-exhibits the object "OO Hotel Capitol" alone to the user. Then, the user accepts the object shown again by manipulating the supplementary specifying unit 34.

The source structure analyzing unit 1001 gives the result of determination in step SG5 as "Yes." In step SG6, the source structure analyzing unit 1001 employs the object ("OO Hotel Capitol") which the user accepts as the partial copy source source information.

In step SG7, the semantic analysis performing unit 1002 performs the semantic analysis of the object shown below included in the partial copy source source information while referring to the dictionary database 50 (see FIG. 8).

### "OO Hotel Capitol"

In the result of the semantic analysis of the copy source, "OO Hotel Capitol" is analyzed to have the semantic attribute "hotel."

In step SG8, the shaping unit 1003 shapes the original copy source information 1300, the partial copy source source information, and the result of the semantic analysis of the copy source into a copy source file collectively, and stores the copy source file in the storage unit 60.

When the user specifies the paste area corresponding to the cursor C in the paste target information 1400 shown in FIG. 32 using the paste area specifying unit 33, the source structure analyzing unit 1001 gives the result of determination in step SA2 as "Yes." In step SA4, the paste preparation process is executed.

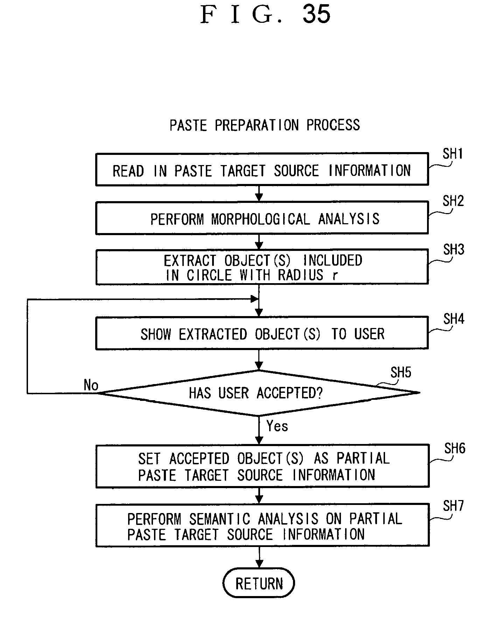

Specifically, in step SH1 shown in FIG. 35, the source structure analyzing unit 1001 reads in the paste target information 1400 (see FIG. 32) from the display controlling unit 10 via the user interface unit 30.

In step SH2, the source structure analyzing unit 1001 executes the morphological analysis on the paste target information 1400, and extracts the respective objects (object). In step SH3, the source structure analyzing unit 1001 extracts the objects included in the circle with a radius r specified by the user (see FIG. 32). Here, objects "enter the destination (facility)" and "Facility" (including the "entry field" on the side) are extracted.

In step SH4, the source structure analyzing unit 1001 shows the objects extracted in step SH3 ("enter the destination (facility)" and "Facility" (including the "entry field" on the side) to the user.

When the objects mentioned above are shown to the user, the objects ("enter the destination (facility)" and "Facility" (including the "entry field" on the side) are highlighted in the paste target information 1400 shown in FIG. 31.

Then, the user determines whether the highlighted portion is the desired paste area or not. When the "facility" (including the "entry field" on the side) alone is the paste target, the user leaves the shown objects unaccepted by manipulating the supplementary specifying unit 34.

In step SH5, the source structure analyzing unit 1001 determines whether the user accepts as described above or not. Here, it is assumed that the source structure analyzing unit 1001 gives the result of determination as "No." In step SH4, the source structure analyzing unit 1001 deletes the object among the objects which is shown earlier, for example, "enter the destination (facility)" according to another exhibition pattern, and re-exhibits the object "facility" (including "entry field" on the side) to the user. Then, the user accepts the re-exhibited object by manipulating the supplementary specifying unit 34.

The source structure analyzing unit 1001 gives the result of determination in step SH5 as "Yes." In step SH6, the source structure analyzing unit 1001 employs the "facility" (including "entry field" on the side) the user accepts as the partial paste target source information.

In step SH7, the semantic analysis performing unit 1002 performs the semantic analysis of the object shown below included in the partial copy source source information while referring to the dictionary database 50 (see FIG. 8).

### . "Facility" (including the "entry field" on the side)

In the result of the semantic analysis of the paste target, "facility" (including the "entry field" on the side) is analyzed to have the semantic attribute "facility."

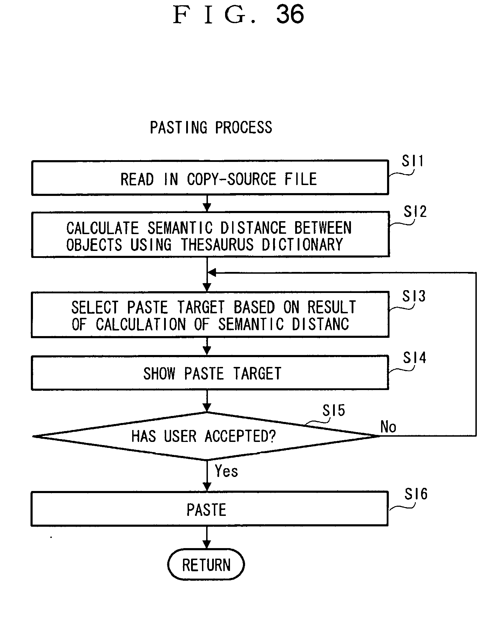

Returning to FIG. 9, in step SA5, the pasting process is executed. Specifically, in step S11 shown in FIG. 36, the entry candidate selecting unit 1201 reads in the copy source file (corresponding to the paste target information 1400 (see FIG. 31)) specified by the user by the supplementary specifying unit 34 from the storage unit 60.

In step SI2, the semantic distance calculating unit 1204 calculates the semantic distance between an object of the result of the semantic analysis of the copy source shown below included in the copy source file and an object of the result of the semantic analysis of the paste target (see FIG. 20) shown below obtained in step SH7 (see FIG. 35) using the thesaurus dictionary database 1100 (see FIG. 33).

### <Result of Semantic Analysis of Copy Source>

· "OO Hotel Capitol" → "hotel"

### <Result of Semantic Analysis of Paste Target>

· "Facility" (including "entry field" on the side) → "Facility"

Here, in the thesaurus dictionary database 1100 shown in FIG. 33, "hotel" exists at two nodes below "facility." Hence, the semantic distance between "hotel" and "facility" is two nodes.

In step SI3, the paste target selecting unit 1202 selects a combination of objects whose semantic distance (=two nodes) calculated in step S12 is smallest and not more than a threshold (three nodes, for example), as the paste target. Here, the pertinent combination is only one. Hence, the paste target selecting unit 1202 selects "facility" (including the "entry field" on the side) as the paste target.

In step SI4, the paste target selecting unit 1202 highlights the paste target selected in step SI3 ("facility" (including the "entry field" on the side) and shows the selected paste target to the user as a candidate of the paste target.

Then, the user determines whether the highlighted portion is a desired paste target or not. Here, it is assumed that the user accepts the paste target.

In step S15, the paste target selecting unit 1202 determines whether the user accepts as described above or not. Here, it is assumed that the paste target selecting unit 1202 gives the result of determination "Yes." When the result of determination in step SI5 is "No," the paste target selecting unit 1202 selects the paste target according to another selection standard in step SI3 and re-exhibits the paste target in step SI4.

In step SI6, the pasting unit 1203 pastes the paste object to the paste target the user accepts. Then, "OO Hotel Capitol" is pasted into the entry field of the facility in the paste target information 1400.

In the third embodiment, the dictionary database 50 and the thesaurus dictionary database 1100 are provided separately as shown in FIG. 30. The present invention, however, is not limited thereto, and the dictionary database 50 and the thesaurus dictionary database 1100 may be structured as one database.

As described above, according to the third embodiment, the paste target is selected based on the result of analysis of the semantic distance between the objects in the copy source information 1300 (copy module) and the paste target information 1400 (paste module) with the use of the thesaurus dictionary database 1100. Hence, the copy-and-paste operation can be performed even on a mere collection of objects, where the structure among objects is not clarified.

Further, according to the third embodiment, the plural objects in the circle with the radius r (predetermined range) are copied from the copy source information 1300 (copy module) based on the copy instruction, and the paste target with a structural association (here, the paste target inside the circle with the radius r (predetermined range) from the paste target information 1400) is selected from the paste module according to the paste instruction. Hence, the copy-and-paste operation can be performed on the plural object by a simplified operation.

In the foregoing, the first to the third embodiments according to the present invention are described in detail with reference to the accompanying drawings. Specific structures thereof, however, are not limited to the first to the third embodiment described above, and modification in design or the like is allowable in the scope not departing from the gist of the present invention.

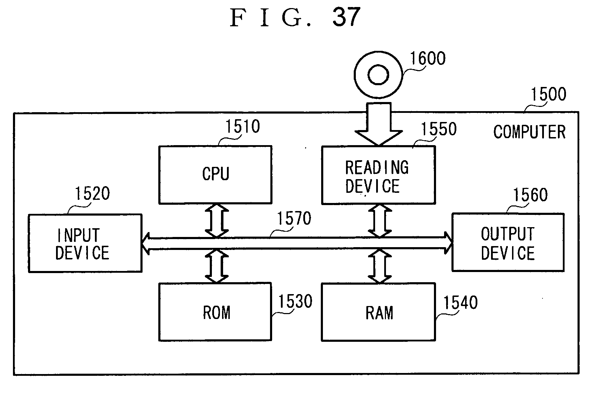

For example, in the first to the third embodiments described above, a program for implementing the function of copy-and-paste as described above may be recorded on a computer readable recording medium 1600 shown in FIG. 37 and read out and executed by a computer 1500 shown in FIG. 37, so that the respective function may be implemented.

The computer 1500 shown in FIG. 37 includes a Central Processing Unit (CPU) 1510 which executes the program, an input device 1520 such as a keyboard or a mouse, a Read Only Memory (ROM) 1530 which stores various data, a Random Access Memory (RAM) 1540 which stores operation parameters or the like, a reading device 1550 which reads out the program from the recording medium 1600, an output device 1560 such as a display or a printer, and a bus 1570 which connects respective elements.

The CPU 1510, after reading out the program recorded in the recording medium 1600 via the reading device 1550, executes the program to realize the function described above. Here, the recording medium 1600 may be an optical disk, a flexible disk, a hard disk or the like.

All or a part of the control described as to be automatically performed in the description of the embodiments may be performed manually, and all or a part of the control described as to be manually performed in the description of the embodiments may be performed automatically based on the conventional technique or the above-described concept. The respective functional blocks shown according to the description of the embodiments can be structured as a CPU and a computer program to be read out and executed by the CPU in practice, or may be structured by a hard wired logic. Further, the respective electric components described above are functional and conceptual, and are not necessarily physically structured as shown in the drawings. In other words, the distribution and the integration of respective units are not limited to those shown in the drawings and all or a part of the respective units can be functionally or physically distributed or integrated according to the load on respective units and the condition of use. Still further, the process sequence or the control sequence described in the above description and the drawings can be modified as necessary if not specified otherwise herein.

### Industrial Applicability

The method of information processing, the program of information processing, the information processing apparatus, and the remote controller according to the present invention are useful as a technique for performing the copy-and-paste operation of various object data in a field of various information processing, and in particular, suitable for performing the copy-and-paste operation on plural objects by a simplified operation.

## Claims

1. A method of information processing comprising:
copying plural objects;
performing a semantic analysis on each of the plural objects;
selecting paste targets which match with results of the semantic analysis; and
pasting the plural objects to the paste targets.

2. The method of information processing according to claim 1, wherein
the copying includes copying the plural objects from a copy module according to a copy instruction of a user, and
the selecting includes selecting the paste target from a paste module according to a paste instruction of the user.

3. The method of information processing according to claim 2, wherein
the copying includes issuing the copy instruction by one user operation, and
the selecting includes issuing the paste instruction by one user operation.

4. The method of information processing according to claim 2 or 3, wherein
the selecting includes selecting the paste target based on a result of analysis of a semantic distance between objects in the copy module and the paste module.

5. The method of information processing according to claim 4, wherein
the copying includes copying plural objects with a structural association from the copy module based on the copy instruction, and
the selecting includes selecting the paste target with a structural association from the paste module based on the paste instruction.

6. The method of information processing according to claim 2 or 3, wherein
the copying includes copying the plural objects in a predetermined range from the copy module based on the copy instruction, and
the selecting includes selecting the paste target in a predetermined range from the paste module based on the paste instruction.

7. The method of information processing according to any one of claims 2 to 6, wherein
the copying includes issuing the copy instruction by a voice of the user, and
the selecting includes issuing the paste instruction by a voice of the user.

8. The method of information processing according to any one of claims 2 to 6, wherein
the copying includes issuing the copy instruction by a voice of the user and a pointer manipulated by the user, and
the selecting includes issuing the paste instruction by the voice of the user and the pointer manipulated by the user.

9. The method of information processing according to any one of claims 2 to 8, wherein
the copying includes showing a candidate of the plural objects to the user for acceptance, and when the user does not accept the candidate, re-exhibiting another candidate of the plural objects to the user until the user accepts the candidate.

10. The method of information processing according to any one of claims 2 to 9, wherein
the selecting includes exhibiting a candidate of the paste target to the user for acceptance, and when the user does not accept the candidate, re-exhibiting another candidate of the paste target to the user until the user accepts the candidate.

11. The method of information processing according to any one of claims 2 to 10, wherein
the copy instruction and the paste instruction are provided by an instruction device which has a communication function between the copy module and the paste module.

12. A program of information processing for making a computer execute the method of information processing according to one of claims 1 to 11.

13. An information processing apparatus comprising:
a copying unit that copies plural objects;
a semantic analysis performing unit that performs a semantic analysis of each of the plural objects;
a paste target selecting unit that selects paste targets which match with results of the semantic analysis; and
a pasting unit that pastes the plural objects to the paste targets.

14. The information processing apparatus according to claim 13, wherein
the copying unit copies the plural objects from a copy module according to a copy instruction of a user, and
the paste target selecting unit selects the paste targets from a paste module according to a paste instruction of the user.

15. The information processing apparatus according to claim 14, wherein
the copying unit issues the copy instruction by one user operation, and
the paste target selecting unit issues the paste instruction by one user operation.

16. The information processing apparatus according to claim 14 or claim 15, wherein
the paste target selecting unit selects the paste targets based on a result of analysis of a semantic distance between objects in the copy module and the paste module.

17. The information processing apparatus according to claim 16, wherein
the copying unit copies the plural objects with structural association from the copy module based on the copy instruction, and
the paste target selecting unit selects the paste target with structural association from the paste module based on the paste instruction.

18. The information processing apparatus according to claim 14 or 15, wherein
the copying unit copies the plural objects in a predetermined range from the copy module based on the copy instruction, and
the paste target selecting unit selects the paste target in a predetermined range from the paste module according to the paste instruction.

19. The information processing apparatus according to any one of claims 14 to 18, wherein
the copying unit issues the copy instruction according to a voice of the user, and
the paste target selecting unit issues the paste instruction according to the voice of the user.

20. The information processing apparatus according to any one of claims 14 to 18, wherein
the copying unit issues the copy instruction according to a voice of the user and a pointer manipulated by the user, and
the paste target selecting unit issues the paste instruction according to the voice of the user and the pointer manipulated by the user.

21. The information processing apparatus according to any one of claims 14 to 20, wherein
the copying unit shows a candidate of the plural objects to the user for acceptance, and when the user does not accept the candidate, re-exhibits another candidate of the plural objects to the user until the user accepts the candidate.

22. The information processing apparatus according to any one of claims 14 to 21, wherein
the paste target selecting unit shows a candidate of the paste target to the user for acceptance, and when the user does not accept the candidate, re-exhibits another candidate of the paste target to the user until the user accepts the candidate.

23. The information processing apparatus according to any one of claims 14 to 22, wherein
the copy instruction and the paste instruction are provided by an instruction device which has a communication function between the copy module and the paste module.

24. A remote controller which executes the method of information processing according to one of claims 1 to 11.
